# EUROPEAN PATENT APPLICATION

(11) **EP 4 841 858 A1**
(43) Date of publication of application: **18.11.2026**
(21) Application number: 24916475.7
(22) Date of filing: 30.09.2024
(51) Int. Cl.: H02J 7/35, H02J 7/32, H02J 7/00

(54) **POWER LEVEL MANAGEMENT SYSTEM AND METHOD FOR ELECTRONIC SHELF LABEL**

(30) Priority: 10.01.2024 CN 202410037936
(71) Applicant: Hanshow Technology Co., Ltd., Jiaxing, Zhejiang 314031 (CN)
(72) Inventor: WANG, Yanwei, Jiaxing, Zhejiang 314031 (CN); LIANG, Min, Jiaxing, Zhejiang 314031 (CN); FU, Zhe, Jiaxing, Zhejiang 314031 (CN); JI, Yaping, Jiaxing, Zhejiang 314031 (CN); SHEN, Zhengqing, Jiaxing, Zhejiang 314031 (CN)
(74) Representative: IP TRUST SERVICES
(86) International application number: PCT/CN2024/122697
(87) International publication number: WO 2025/148424

(57) **Abstract**

Disclosed by the present disclosure are an electronic shelf labels (ESLs) power level management system and method. The system includes: a plurality of ESLs, each configured to display ESL content, charge the respective ESL by harvesting and converting light energy and energy from other sources, and collect and report ESL status information thereof; an ESL base station, configured to forward the ESL status information received from the plurality of ESLs based on a preset communication protocol; an ESL management device, configured to send a power level maintenance instruction to an ESL power level maintenance device, so as to perform power level maintenance on different ESLs; and the ESL power level maintenance device, configured to charge the ESLs in charging modes corresponding to ESL power level management strategies carried in the power level maintenance instruction.

## Description

### RELATED APPLICATION

The present disclosure claims priority to Chinese Patent Application No. 202410037936.5 filed on January 10, 2024, which is hereby incorporated by reference in its entirety.

### TECHNICAL FIELD

The present disclosure relates to the technical field of electronic shelf labels, and particularly to a power level management system and method for an electronic shelf label (ESL).

### BACKGROUND

This section is intended to provide background or context for embodiments of the present disclosure set forth in the claims. The description here is not admitted to be the prior art just because it is included in this section.

For micro-energy electronic shelf labels (ESLs), such as photovoltaic ESLs, or conventional ESLs, the energy required for screen price update, wireless communication and other operations is generally electric energy converted from light energy or remaining stored power, or partially supplied by backup batteries inside the labels. Since micro-energy sources such as ambient light are usually unstable and the operation frequency of the labels fluctuates, the converted energy and the remaining stored power of the ESLs change dynamically.

To ensure normal operation functions of such ESLs, it is necessary to monitor and manage the power thereof, especially for large-scale deployed micro-energy ESL clusters. However, the workload of power level management and maintenance on these clusters is enormous.

The light environment maintenance on existing solar-powered ESLs, as well as power level management, power level monitoring and power level maintenance performed after light harvesting by the labels, all rely on independent self-management of each label, and labels with low power levels require manual maintenance separately, which results in high maintenance costs and poor real-time performance.

### SUMMARY

According to the embodiments of the present disclosure, a power level management system for electronic shelf labels (ESLs) is provided, so as to improve the accuracy and efficiency of ESL power level management, prolong the service life and reduce the maintenance cost of ESLs, the method including:
a plurality of ESLs, each configured to display ESL content, charge the respective ESL by harvesting and converting light energy and energy from other sources, and collect and report ESL status information thereof; and the ESL status information includes remaining power level information, ambient light intensity information and positioning information; the energy from other sources includes one or any combination of vibration micro-energy, radio micro-energy, temperature difference micro-energy and battery energy;
an ESL base station, configured to forward the ESL status information received from the plurality of ESLs based on a preset communication protocol;
an ESL management device, configured to send a power level maintenance instruction to an ESL power level maintenance device according to the ESL status information received from the ESL base station and based on different ESL power level management strategies, so as to perform power level maintenance on different ESLs; and
the ESL power level maintenance device, configured to charge, according to the ESL power level management strategies and the ESL status information carried in the power level maintenance instruction, the ESLs by using different charging modes corresponding to the ESL power level management strategies; wherein the charging modes comprise illuminating the ESLs with a light source, emitting radio energy, and near-field coupling charging.

The embodiments of the present disclosure further provide a power level management method for electronic shelf labels (ESLs), which is applied to the aforementioned power level management system for the ESLs, so as to improve the accuracy and efficiency of ESL power level management, prolong the service life and reduce the maintenance cost of ESLs, the method including:
displaying, by the ESL, ESL content, charge itself by harvesting and converting light energy and energy from other sources, and collect and report ESL status information thereof; and the ESL status information includes remaining power level information, ambient light intensity information and positioning information; the energy from other sources includes one or any combination of vibration micro-energy, radio micro-energy, temperature difference micro-energy and battery energy;
forwarding, by the ESL base station, the ESL status information received from the plurality of ESLs based on a preset communication protocol;
sending, by the ESL management device, a power level maintenance instruction to an ESL power level maintenance device according to the ESL status information received from the ESL base station and based on different ESL power level management strategies, so as to perform power level maintenance on different ESLs; and
charging, by the ESL power level maintenance device according to the ESL power level management strategies and the ESL status information carried in the power level maintenance instruction, the ESLs by using different charging modes corresponding to the ESL power level management strategies; and the charging modes include illuminating the ESLs with a light source, emitting radio energy, and near-field coupling charging.

The embodiments of the present disclosure further provide a computer device, including a memory, a processor, and a computer program stored in the memory and executable on the processor, and when executing the computer program, the processor implements the aforementioned power level management method for ESLs.

The embodiments of the present disclosure further provide a computer-readable storage medium, and the computer-readable storage medium stores a computer program which when executed by a processor, implements the aforementioned power level management method for ESLs.

The embodiments of the present disclosure further provide a computer program product, and the computer program product includes a computer program which when executed by a processor, implements the aforementioned power level management method for ESLs.

In the embodiments of the present disclosure, a plurality of ESLs are provided, each configured to display ESL content, charge the respective ESL by harvesting and converting light energy and energy from other sources, and collect and report ESL status information thereof; the ESL status information includes remaining power level information, ambient light intensity information and positioning information; the energy from other sources is one or any combination of vibration micro-energy, radio micro-energy, temperature difference micro-energy and battery energy; an ESL base station is configured to forward the ESL status information received from the plurality of ESLs based on preset communication protocols; an ESL management device is configured to send a power level maintenance instruction to an ESL power level maintenance device according to the ESL status information received from the ESL base station and based on different ESL power level management strategies, so as to perform power level maintenance on different ESLs; the ESL power level maintenance device is configured to charge, according to the ESL power level management strategies and the ESL status information carried in the power level maintenance instruction, the ESLs by using different charging modes corresponding to the ESL power level management strategies; and the charging modes include illuminating the ESLs with a light source, emitting radio energy, and near-field coupling charging. Compared with the conventional solutions in the prior art where the ESL power level can only be maintained and managed manually, the technical solution proposed in the embodiments of the present disclosure adopts the ESLs mainly powered by light energy and compatible with other micro-energy sources. In combination with the ESL management device, this technical solution conducts power level management and maintenance on the ESLs by means of various ESL power level maintenance devices in multiple modes, thereby avoiding errors and omissions easily caused by manual ESL power level maintenance and management in the prior art, and improving the accuracy and efficiency of ESL power level management. Meanwhile, based on preset ESL power level management strategies, it is possible to perform intelligent light supplement, inspection and charging maintenance on the ESLs in different charging modes corresponding to the ESL power level management strategies, thereby realizing intelligent monitoring, management and maintenance on the energy for the ESLs throughout the full life cycle, prolonging the service life and reducing the maintenance cost thereof.

### BRIEF DESCRIPTION OF DRAWINGS

In order to more clearly illustrate the technical solutions in the embodiments of the present disclosure or in the prior art, the drawings to be used in the description of the embodiments or the prior art will be briefly introduced below. Obviously, the drawings involved in the following description only illustrate some embodiments of the present disclosure, and other drawings can be obtained by those of ordinary skill in the art according to these drawings without paying any inventive work. In the drawings:
FIG. 1 illustrates a structural schematic diagram of a power level management system for electronic shelf labels (ESLs) according to an embodiment of the present disclosure.
FIG. 2 illustrates a schematic diagram of an IoT system including a power level monitoring and maintenance platform for ESLs according to an embodiment of the present disclosure.
FIG. 3 illustrates a detailed schematic diagram of a module architecture of an ESL according to an embodiment of the present disclosure.
FIG. 4 illustrates a detailed schematic diagram for determining remaining power level information of an ESL according to an embodiment of the present disclosure.
FIG. 5 illustrates a detailed schematic diagram for determining remaining power level information of an ESL according to an embodiment of the present disclosure.
FIG. 6 illustrates a detailed schematic diagram of an ESL base station according to an embodiment of the present disclosure.
FIG. 7 illustrates a detailed schematic diagram of an artificial intelligence (AI) light source according to an embodiment of the present disclosure.
FIG. 8 illustrates a detailed schematic diagram of an AI inspection robot according to an embodiment of the present disclosure.
FIG. 9 illustrates a detailed schematic diagram of an AI shopping cart according to an embodiment of the present disclosure.
FIG. 10 illustrates a detailed schematic diagram of an AI shelf according to an embodiment of the present disclosure.
FIG. 11 illustrates a detailed schematic diagram of an ESL management device according to an embodiment of the present disclosure.
FIG. 12 illustrates a detailed schematic diagram of operation of an ESL management device according to an embodiment of the present disclosure.
FIG. 13 illustrates a detailed schematic diagram for positioning an ESL according to an embodiment of the present disclosure.
FIG. 14 illustrates a structural schematic diagram of a power level management system for ESLs according to an embodiment of the present disclosure.
FIG. 15 illustrates a flow schematic diagram of a power level management method for ESLs according to an embodiment of the present disclosure.
FIG. 16 illustrates a schematic diagram of a computer device for power level management of ESLs according to an embodiment of the present disclosure.

### DESCRIPTION OF EMBODIMENTS

In order that the objectives, technical solutions and advantages of the embodiments of the present disclosure are clearer, the embodiments of the present disclosure will be further described in detail with reference to the drawings. Herein, the exemplary embodiments of present disclosure and the descriptions thereof are used to explain the present disclosure, but should not be used as limitations thereto.

The term "and/or" used herein merely describes an association relationship, indicating that three relationships may exist. For example, A and/or B may represent three cases: only A exists, both A and B exist simultaneously, and only B exists. In addition, the term "at least one" herein refers to any one of a plurality of items or any combination of at least two of the plurality of items. For instance, "including at least one of A, B or C" may mean including any one or more elements selected from the group consisting of A, B and C.

In the description of the present disclosure, the terms such as "include", "comprise", "have" and "contain" are all open-ended expressions, meaning including but not limited to the listed items. References to "an embodiment", "a specific embodiment", "some embodiments", "for example" and the like indicate that specific features, structures or characteristics described in conjunction with such embodiment(s) or example(s) are included in at least one embodiment or example of the present disclosure. In the present disclosure, the schematic expressions of the above terms do not necessarily refer to the same embodiment or example. Furthermore, the specific features, structures or characteristics described may be combined in any suitable manner in any one or more embodiments or examples. The step sequence involved in each embodiment is provided to schematically illustrate the implementation of the present disclosure, and the step sequence is not limited and may be appropriately adjusted as required.

The acquisition, storage, use, processing, etc. of data in the technical solutions of the present disclosure all comply with relevant provisions of national laws and regulations.

The embodiments of the present disclosure concern the following nouns, which are explained as follows:
LED: Light-emitting Diode
NFC: Near Field Communication
ESL: Electronic Shelf Label
LDR: Light Dependent Resistor
AP: Wireless Access Point (ESL controller)
AI: Artificial Intelligence
PDA: Personal Digital Assistant
SaaS: Software as a Service
API: Application Programming Interface
BT: Bluetooth
WiFi: Wireless Fidelity, wireless local area network based on IEEE 802.11
SoC: System on Chip

At the current stage, the energy required for photovoltaic or other micro-energy ESLs is electric energy converted from light energy or remaining stored power, and partially supplied by the backup batteries in the labels. Affected by unstable micro-energy sources such as ambient light and fluctuating operation frequencies of the labels, the converted electric energy and the stored power of the ESLs change dynamically. To ensure normal operation functions of such ESLs, it is critical to monitor and manage the power thereof, especially for large-scale deployed micro-energy ESL clusters. However, the workload of power level management and maintenance on these clusters is enormous.

Although there are some demonstration prototypes of light-powered ESLs available at present, mass production has not yet been realized. Such demonstration labels draw energy from light harvesting cell sheets, and cooperate with an energy storage device and a power level management circuit in a rear-end circuit to realize energy harvesting, self-power level management and power level monitoring of a single light-powered ESL. Each of the light-powered ESLs adopts independent power level maintenance. Therefore, the light environment maintenance on existing light-powered ESLs, as well as power level management, power level monitoring and power level maintenance on the labels performed after light harvesting, all rely on independent self-management of each label, while labels with low remaining power require manual maintenance separately. These operations have not formed an intelligent linkage system with intelligent devices such as a background Internet of Things (IoT) management platform for ESLs, an intelligent light source device and an AI robot, resulting in high maintenance costs and poor real-time performance.

In addition, energy sources of existing ESLs include primary lithium-manganese coin batteries, primary lithium-manganese pouch batteries, primary lithium thionyl chloride batteries and the like. Such batteries have limited service life and suffer from self-discharge. Affected by factors such as capacity consumption during standby of the labels, the service life of the batteries equipped on the ESLs is limited. When remaining power is exhausted or in similar statuses, new batteries must be replaced in a timely manner; otherwise, normal operation of the ESLs will be affected. This battery replacement mode brings additional labor and cost investment to the application side.

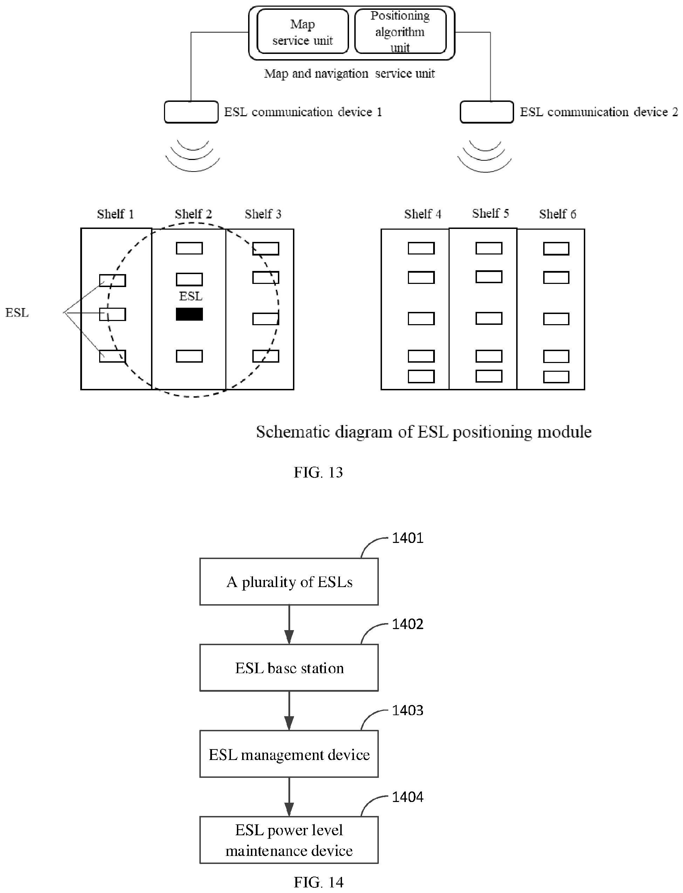

To solve the above problems, an embodiment of the present disclosure provides a power level management system for ESLs, which can improve the accuracy and efficiency of ESL power level management, and prolong the service life and reduce the maintenance cost of ESLs. With reference to FIG.14, the system may include:
a plurality of ESLs 1401, each configured to display ESL content, charge the respective ESL by harvesting and converting light energy and energy from other sources, and collect and report ESL status information thereof; and the ESL status information includes remaining power level information, ambient light intensity information and positioning information; the energy from other sources includes one or any combination of vibration micro-energy, radio micro-energy, temperature difference micro-energy and battery energy;
an ESL base station 1402, configured to forward the ESL status information received from the plurality of ESLs based on a preset communication protocol;
an ESL management device 1403, configured to send a power level maintenance instruction to an ESL power level maintenance device according to the ESL status information received from the ESL base station and based on different ESL power level management strategies, so as to perform power level maintenance on different ESLs; and
the ESL power level maintenance device 1404, configured to charge, according to the ESL power level management strategies and the ESL status information carried in the power level maintenance instruction, the ESLs by using different charging modes corresponding to the ESL power level management strategies; and the charging modes include illuminating the ESLs with a light source, emitting radio energy, and near-field coupling charging.

In this embodiment, communication between the plurality of ESLs 1401 may be realized via wireless communication technologies, such as Bluetooth and Wi-Fi. The sensor inside each of the ESLs 1401 can monitor the changes of the environment such as light intensity and temperature in real time, and adjust the charging rate and balance the charging status according to the monitoring results. The ESLs 1401 may further collect and process information from other sensors, including humidity and illumination intensity, to optimize the charging strategies.

The ESL management device 1403 may remotely control and manage the ESLs according to the ESL status information. For example, if the remaining power of one ESL is lower than a preset threshold, the ESL management device 1403 can send an instruction to instruct the ESL to preferentially use battery energy so as to guarantee its normal operation. Meanwhile, the ESL management device 1403 may further reasonably schedule the charging duration and the charging modes according to the positioning information of the ESLs, thereby improving the charging efficiency.

The ESL power level maintenance device 1404 may select an appropriate charging mode according to the charging demand and environmental conditions of the ESLs. When charging by illuminating the ESLs with a light source, the ESL power level maintenance device 1404 can control the angle and illumination intensity of the ESLs 1401 to maximize light energy conversion efficiency. When charging by emitting radio energy, the ESL power level maintenance device 1404 can adjust the radio emitting power and frequency to improve charging efficiency. When charging via near-field coupling charging, the ESL power level maintenance device 1404 can control the charging distance and coupling coefficient of the ESLs 1401 to realize safe and efficient charging.

In addition, the power level management system for ESLs may further include a data storage device 1405 configured to store the ESL status information, charging history data and the like. The data storage device 1405 may adopt cloud storage or local storage to realize secure data storage and convenient data query. An administrator may check the charging statuses and historical data of the ESLs via the ESL management device 1403, so as to realize better management and maintenance on the ESLs.

The power level management system for ESLs according to the embodiment of the present disclosure collects and processes the ESL status information in real time, and performs targeted power level maintenance on the ESLs according to different ESL power level management strategies, so as to improve the accuracy and efficiency of ESL power level management. Meanwhile, the system adopts multiple charging modes and fully utilizes light energy, vibration micro-energy, radio micro-energy, temperature difference micro-energy and the like in the environment, which effectively extends the service life and reduces the maintenance costs of the ESLs. In conclusion, the power level management system for ESLs according to the embodiment of the present disclosure has high practicability and broad application prospects.

In the embodiments of the present disclosure, a plurality of ESLs are provided, each configured to display ESL content, charge the respective ESL by harvesting and converting light energy and energy from other sources, and collect and report ESL status information thereof; the ESL status information includes remaining power level information, ambient light intensity information and positioning information; the energy from other sources is one or any combination of vibration micro-energy, radio micro-energy, temperature difference micro-energy and battery energy; an ESL base station is configured to forward the ESL status information received from the plurality of ESLs based on preset communication protocols; an ESL management device is configured to send a power level maintenance instruction to an ESL power level maintenance device according to the ESL status information received from the ESL base station and based on different ESL power level management strategies, so as to perform power level maintenance on different ESLs; the ESL power level maintenance device is configured to charge, according to the ESL power level management strategies and the ESL status information carried in the power level maintenance instruction, the ESLs by using different charging modes corresponding to the ESL power level management strategies; and the charging modes include illuminating the ESLs with a light source, emitting radio energy, and near-field coupling charging. Compared with the conventional solutions in the prior art where the ESL power level can only be maintained and managed manually, the technical solution proposed in the embodiments of the present disclosure adopts the ESLs mainly powered by light energy and compatible with other micro-energy sources. In combination with the ESL management device, this technical solution conducts power level management and maintenance on the ESLs by means of various ESL power level maintenance devices in multiple modes, thereby avoiding errors and omissions easily caused by manual ESL power level maintenance and management in the prior art, and improving the accuracy and efficiency of ESL power level management. Meanwhile, based on preset ESL power level management strategies, it is possible to perform intelligent light supplement, inspection and charging maintenance on the ESLs in different charging modes corresponding to the ESL power level management strategies, thereby realizing intelligent monitoring, management and maintenance on the energy for the ESLs throughout the full life cycle, prolonging the service life and reducing the maintenance cost thereof.

During implementation, the plurality of ESLs are each configured to display ESL content, charge the respective ESL by harvesting and converting light energy and energy from other sources, and collect and report ESL status information thereof; the ESL status information includes remaining power level information, ambient light intensity information and positioning information; the energy from other sources includes one or any combination of vibration micro-energy, radio micro-energy, temperature difference micro-energy and cell energy.

In practical application, the ESLs may implement more intelligent functions via a plurality of sensors. Such sensors can monitor changes in the environment such as temperature, humidity and illumination, so as to adjust the displayed content of the ESLs according to actual conditions. In addition, the ESLs may be communicated with other intelligent devices to realize data exchange and information synchronization, thereby improving the collaboration efficiency of the whole system.

In terms of charging of the ESLs, the energy harvesting technology can convert vibration micro-energy, radio micro-energy, temperature difference micro-energy and the like in the surrounding environment into electric energy to supply continuous and stable power for the ESLs. This self-sufficient charging mode not only reduces operation costs, but also has the advantages of environmental protection and energy conservation.

To ensure stable operation of the ESLs, the system should also be provided with fault detection and self-repair functions. When a fault of the ESLs is detected, the system may automatically send an alarm and upload fault information in a timely manner. By analyzing such information, operation and maintenance personnel can quickly locate the fault and take corresponding measures for repair. In addition, the ESLs can automatically adjust operation parameters according to their own statuses and changes in the environment, so as to guarantee optimal display effect and endurance capacity.

In terms of management, centralized management of the ESLs may be realized via a cloud computing platform. The cloud computing platform may receive the status information uploaded by the ESLs in real time, such as the remaining power and the positioning information, and perform data analysis and decision-making based on such information. With the cloud computing platform, merchants can better grasp the sales status of commodities and make adjustments as needed.

According to the embodiment, wireless communication technologies such as Bluetooth, Wi-Fi or other wireless communication protocols are adopted for communication between the plurality of ESLs 1401. The ESLs 1401 may further collect environmental information such as temperature, humidity and illumination via the sensors, and upload such information to the ESL base station 1402.

According to the embodiment, one or more of a solar cell sheet, an energy harvesting and conversion circuit, a light intensity detection circuit, a near-field coupling circuit, a radio energy harvesting circuit, and a backup battery are integrated into the existing ESLs, such that the ESLs are mainly powered by light energy, while being compatible with other energy sources such as micro-energy sources, backup batteries and the like.

In an embodiment, the ESL includes a control module, a positioning module, an ambient light intensity monitoring module, an energy storage device, a micro-energy charging circuit, a communication module and a solar cell sheet;
the positioning module is configured to determine the positioning information of the ESL;
the ambient light intensity monitoring module is configured to monitor ambient light intensity around the ESL;
the solar cell sheet is configured to charge the energy storage device by harvesting and converting light energy, wherein the light energy includes ambient light and sunlight;
the micro-energy charging circuit is configured to charge the energy storage device by harvesting and converting the vibration micro-energy, the radio micro-energy and the temperature difference micro-energy;
the control module is configured to determine the remaining power level information of the ESL according to collected power-level related parameters inside the ESL;
the communication module is configured to report the remaining power level information, the ambient light intensity information and the positioning information of the ESL.

In the above embodiment, the ESL is further provided with an ambient light intensity monitoring module, which is responsible for monitoring and reporting the ambient light intensity. The ESL power level maintenance device adjusts intelligent light source devices around the ESL according to the ambient light intensity reported by the ESL, so as to supplement power for the ESL. An electronic paper display (EPD) achieves non-luminous display, which is different from liquid crystal ESLs. In addition, the ESL is further provided with a radio energy charging circuit, which receives wireless charging energy from a charging base via radio waves to supplement power for the ESL.

The ESL has a wide range of application scenarios, including but not limited to retail venues such as supermarkets, shopping malls and pharmacies, where the ESL can display commodity price information in real time for consumers to view. Meanwhile, the ESL may exchange data with a background management system via the communication module to realize various functions including commodity inventory management and price adjustment.

To ensure stable operation of the ESL, the system is further provided with a power level management circuit for intelligent management of the battery inside the ESL. The power level management circuit can reasonably distribute the energy output of the battery according to real-time power consumption demands of the ESL, so as to extend the service life of the ESL. In addition, the ESL is further provided with a micro-energy charging circuit, which harvests and converts micro-energy such as vibration energy, radio energy and temperature difference energy to provide extra guarantee for the endurance of the ESL.

In terms of the positioning module, the ESL may adopt multiple positioning technologies such as GPS, Bluetooth, Wi-Fi and a private protocol dedicated to ESLs to accurately acquire position information of the ESL. Such position information may be used to realize functions including commodity traceability and logistics tracking, thereby bringing more convenience to enterprises and consumers.

In the embodiment, maintaining the light environment, the power level and other related parameters of photovoltaic ESLs via intelligent devices can extend the service life of such green ESLs, so as to equivalently reduce the carbon footprint of label products and comply with the prevailing low-carbon and eco-friendly development trend of IoT products. In addition, maintaining the light environment, the power level and other related parameters of photovoltaic ESLs via intelligent devices can greatly cut manual maintenance working hours and overall maintenance costs over the entire life cycle of the ESLs.

In an embodiment, the control module is specifically configured to:
determine, if the ESL is in an operating status, the remaining power level information of the ESL based on a load voltage parameter of an energy storage module of the ESL and a preset relationship between load voltage parameters and remaining power level information;
determine, if the ESL is in a non-operating status, the remaining power level information of the ESL based on an open-circuit voltage parameter of the energy storage module of the ESL and a preset relationship between open-circuit voltage parameters and remaining power level information;
and/or determine the remaining power level information of the ESL based on a voltage difference between the open-circuit voltage parameter and the load voltage parameter of the energy storage module of the ESL and a preset relationship between voltage differences and remaining power level information;
and/or integrate current consumption generated by executing instruction operations by the ESL to obtain power consumption generated by ESL performing the instruction operations, and determine the remaining power level information of the ESL based on the power consumption.

Specific implementations for accurately determining the remaining power level information of the ESL by various methods may include the following steps:
First, when the ESL is in an operating status, the control module monitors the load voltage parameters of the energy storage module of the ESL. The remaining power level of the ESL can be calculated by comparing the measured load voltage parameters with the preset load voltage parameters. This method can reflect the power consumption conditions of the ESL in real time when the ESL is in the operating status.
Second, when the ESL is in the non-operating status, the control module detects the open-circuit voltage parameters of the energy storage module of the ESL. The remaining power level of the ESL can be estimated according to a preset relationship between the open-circuit voltage parameters and the remaining power level. This method can effectively predict the remaining power level of the ESL for its next operation when the ESL is in the non-operating status.

Next, the control module may further determine the remaining power level of the ESL by analyzing the voltage difference between the open-circuit voltage parameters and the load voltage parameters of the energy storage module of the ESL. This method comprehensively considers both voltage and current characteristics of the ESL, and can predict the remaining power level of the ESL more accurately.

Finally, the control module may integrate the current consumption generated by executing instruction operations by the ESL to obtain the power consumption generated by ESL performing the instruction operations. The remaining power level information of the ESL can be further determined based on the power consumption. This method can accurately calculate power loss of the ESL during each instruction operation, so as to provide a more accurate basis for the estimation of the remaining power level.

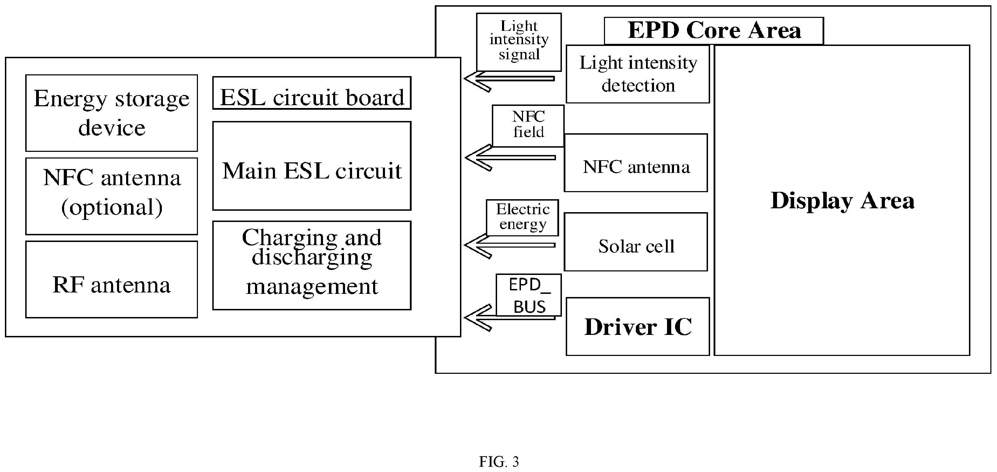

In an embodiment, implementations for reporting power level related information of the photovoltaic ESLs mainly include the following types, as illustrated in FIG. 3:
1. The remaining power level is characterized by the load voltage parameters of the energy storage device.

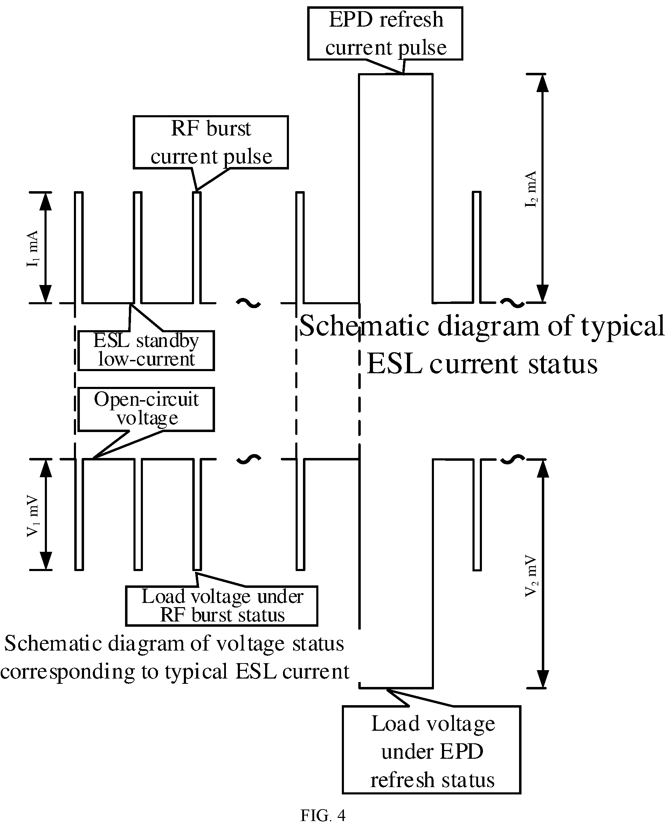

The load voltage of the energy storage device measured under the typical operating status of the ESL, i.e., under the typical load current, includes but is not limited to the following parameters:
an output load voltage of the energy storage device sampled by the ESL circuit when the ESL is in a radio frequency receiving or sending status;
an output load voltage of the energy storage device sampled by the ESL circuit when the ESL is in a screen content refreshing status; the following item is optional;
an output load voltage of the energy storage device sampled by the ESL circuit when the ESL is in an LED flashing status;
the background system can derive the remaining power level of the energy storage device based on preset correspondences among the ESL characteristic status, the energy storage device type, the load voltage under each characteristic status (e.g., the load voltage under an RF Burst status illustrated in FIG. 4) and the power level of the energy storage device.

2. The remaining power level is characterized by the open-circuit voltage parameters of the energy storage device.

When the ESL is in a sleep standby status, the ESL circuit samples the open-circuit voltage of the energy storage device (the open-circuit voltage corresponding to the ESL standby lowcurrent status illustrated in FIG. 4) and reports the open-circuit voltage to the background system.

The background system can derive the remaining power level of the energy storage device based on preset correspondences among the energy storage device type, the open-circuit voltage and the power level of the energy storage device.

3. The remaining power level is characterized by the voltage difference parameter of the energy storage device (this mode is optional).

The ESL collects the voltage difference between the load voltage and the open-circuit voltage under the RF Burst status (V1 or V2 illustrated in FIG. 4), and reports the voltage difference to the background system.

The background system can derive the remaining power level of the energy storage device based on preset correspondences among the characteristic current under the RF Burst status, the voltage difference and the power level of the energy storage device.

4. The remaining power level is characterized by an integrated electric quantity parameter of the energy storage device obtained by integrating current with respect to time.

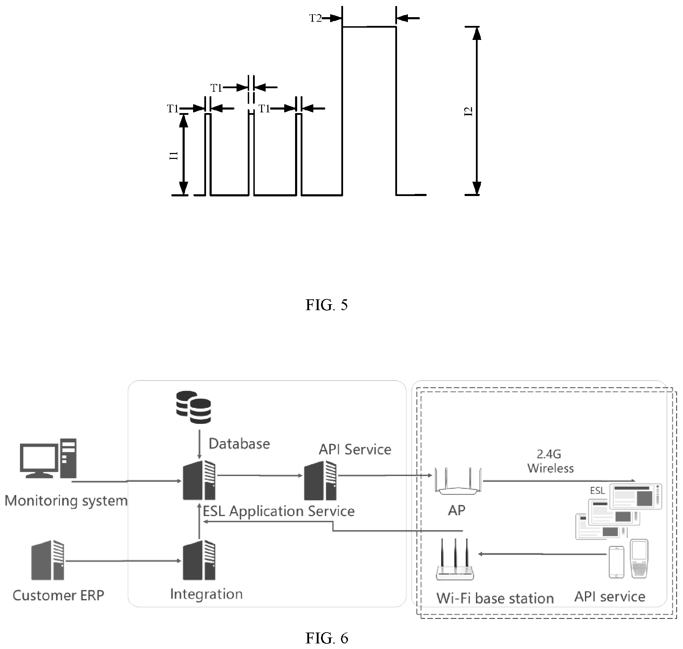

As illustrated in FIG. 5, the ESL monitors internal instruction operations. It integrates current consumption generated by each instruction operation to obtain the total consumed electric quantity Q (mAh) of the ESL up to the current moment:$Q = {3 I}_{1} {* T}_{1} + {I}_{2} {* T}_{2}$ where Q denotes the total consumed electric quantity of the ESL up to the current moment; I₁ denotes the typical pulse current for RF frame reception when the ESL is in a standby status; T₁ denotes the typical pulse current time width for RF frame reception when the ESL is in the standby status; I₂ denotes the typical pulse current for RF frame sending when the ESL is in the standby status; and T₂ denotes the typical pulse current time width for RF frame sending when the ESL is in the standby status.

Either the background system of the ESL or the ESL can calculate the remaining power level of the energy storage device of the ESL by subtracting the consumed electric quantity Q from the known capacity of the energy storage device.

5. The remaining power level is characterized by the load output voltage or current of the power supply device such as the solar cell.

When the ESL is not provided with an internal energy storage device (e.g., the ESL is provided with a large-area solar cell sheet), the ESL samples and monitors the load output voltage or current of the power supply device such as the solar cell sheet, and reports the sampled data to the background system.

Either the background system of the ESL or the ESL can determine the driving status of the power supply device according to the known driving capacity of the output voltage or current of the power supply device (e.g., the solar cell sheet).

All the above five modes can be used to report the power level related information of the photovoltaic ESLs, so as to achieve accurate monitoring and evaluation of the remaining power level of the energy storage device.

Taking micro-energy ESLs as an example, one type thereof is an optional photovoltaic ESL, which is composed of hardware-software component modules or device including an ESL main control circuit, a light intensity sampling circuit or module, a solar cell sheet, an energy storage device, a power level management circuit, a micro-energy charging circuit, a radio frequency charging circuit, and a software-based wireless positioning algorithm. The main functions of the modules included in the photovoltaic ESL are as follows:
the main control circuit is responsible for operations such as wireless communication, price change display and wireless positioning of the ESL;
the light intensity sampling circuit or module is provided with a photosensitive sensor such as an LDR to monitor ambient illuminance;
the main control circuit samples internal parameters of the ESL including electric quantity, voltage and current to monitor the remaining power level;
the communication module provides various parameters and status information of the ESL to the Internet of Things (IoT) platform of the ESL management system;
the ESL obtains and reports position information via wireless communication and positioning algorithms;
the ESL integrates the solar cell sheet, and may also integrate micro-energy transducers for vibration, radio frequency and the like as well as energy harvesting circuits to realize micro-energy collection;
other types of renewable micro-energy ESLs integrate micro-energy transducers for vibration, radio frequency, temperature difference and the like as well as energy harvesting circuits, and further include the main control circuit, the energy storage device, the power level management circuit, the wireless positioning algorithms and the like.

In this embodiment, the operation principle of the micro-energy ESL can be divided into the following steps.

Firstly, the photovoltaic ESL harvests ambient light energy via the solar cell sheet and converts it into electric energy. Part of the electric energy is used for power supply, and the rest is stored in the energy storage device for standby use.

Subsequently, the ESL main control circuit manages the harvested electric energy to ensure normal operation of the ESL. The light intensity sampling circuit or module is responsible for monitoring ambient illuminance. The ESL power level maintenance device can formulate an intelligent maintenance strategy according to the light intensity information reported by the ESL and the remaining power level status of the energy storage device, so as to guarantee stable operation of the ESL.

In addition, the ESL is further provided with wireless communication and wireless positioning functions. The communication module is responsible for transmitting various statuses and parameters of the ESL to the IoT platform of the ESL management system. The ESL can obtain its own position information via wireless communication and positioning algorithms and report such information to the management system.

In terms of micro-energy harvesting, the ESL integrates not only the solar cell sheet, but also micro-energy transducers for vibration and radio frequency as well as energy harvesting circuits. Such micro-energy transducers and energy harvesting circuits can harvest ambient micro-energy including vibration energy and radio frequency energy, which further improve the energy utilization rate of the ESL.

Finally, the ESL uploads all collected information to the IoT platform of the ESL management system via wireless communication and positioning algorithms. In this way, a manager can grasp the operating status of the ESL in real time and perform remote control and management thereon as required.

To sum up, the micro-energy ESL makes full use of the micro-energy harvesting technology, so as to realize energy conservation and environmental friendliness. By integrating a plurality of functional modules for light energy harvesting, wireless communication, wireless positioning and other functions, the ESL not only achieves low-power operation, but also provides convenient management means.

During implementation, the ESL base station is configured to forward the ESL status information received from the plurality of ESLs based on a preset communication protocol.

The ESL base station acts as an information transfer station and is responsible for receiving and processing status information from each of the ESLs. A preset communication protocol is adopted inside the base station to guarantee the accuracy and timeliness of the information. After receiving the status information sent by the ESLs, the base station analyzes and processes such information. In this embodiment, the base station mainly performs information receiving, processing and forwarding, and is generally not configured as a device for bulk processing of key data. The processing of bulk commodity data is undertaken by the background system, namely the ESL management device.

In an embodiment, the system is built based on wireless communication protocols such as private protocols, Bluetooth (BT) and Wi-Fi, and consists of components including an ESL monitoring system, an ESL management system, map and navigation services, and a database. And, the system includes the hardware devices including an ESL, an access point (AP), a Wi-Fi router, a database server and a docking server. Exemplary system devices are illustrated in FIG. 6.

The typical functions of the ESL system include, but are not limited to: binding/unbinding, screen update, multi-page storage, listening frame adjustment, global flashing, global page switching, fast flashing, fast page switching, precise timing service, point-to-point flashing, point-to-point page switching, heartbeat, ESL firmware upgrade, base station firmware upgrade, network optimization, regular screen refresh, temperature sampling, device and communication security, fast network access, mobile scenario support and positioning (including ESLs, intelligent maintenance devices and the like).

In the above embodiment, the ESL base station adopts advanced algorithms and data analysis technologies to efficiently process the collected ESL status information. The base station is internally provided with an efficient data processing unit, which can analyze the status information sent by the ESLs in real time and quickly send processing results to relevant merchants or managers. In addition, the base station is further provided with an AI assistant function, whereby commodity sales trends can be predicted and more accurate marketing strategies can be provided to merchants through mining and analyzing historical data.

The ESL base station further supports remote monitoring and maintenance functions. Merchants or managers may monitor the usage status of the ESLs via the base station, and obtain real-time data including commodity sales volumes and inventory levels. When an abnormal condition occurs, the base station automatically triggers an alarm to prompt relevant personnel to conduct timely processing. This helps merchants reduce operation costs and improve management efficiency.

In addition, the ESL base station supports multiple communication protocols including private protocols, Bluetooth and Wi-Fi, and exhibits excellent compatibility and stability. In practical application scenarios, the base station can seamlessly interconnect with other system devices such as APs and Wi-Fi routers to realize data exchange and sharing, which provides strong support for constructing an intelligent retail ecosystem.

To achieve more efficient data processing and analysis, the ESL base station may also be combined with other service systems including map and navigation services and databases. For example, inventory and sales data of commodities can be marked on an electronic map to provide merchants with intuitive business data analysis results. Furthermore, the base station may seamlessly interface with intelligent devices such as intelligent handheld terminals and intelligent surveillance cameras to realize collection and processing of multi-dimensional data.

During implementation, the ESL management device is configured to send a power level maintenance instruction to the ESL power level maintenance devices according to the ESL status information received from the ESL base station and based on different ESL power level management strategies, so as to perform power level maintenance on different ESLs.

After receiving the ESL status information transmitted by the ESL base station, the ESL management device sends a power level maintenance instruction to the ESL power level maintenance devices according to different ESL power level management strategies. Such operations perform power level maintenance on each ESL and ensure normal operation thereof.

During implementation, the ESL management device performs classified management on the ESLs according to the real-time statuses thereof. For example, for ESLs with insufficient power levels, the ESL management device preferentially send power supplement instructions to ensure that the power levels of these ESLs meet the requirements for normal operation. Meanwhile, for ESLs with sufficient power levels, the ESL management device conducts regular inspections to keep their power levels within a reasonable range.

In addition, the ESL management device may adjust the ESL power level management strategies according to the application scenarios and importance levels. For instance, in key scenarios or critical time periods, the ESL management device intensifies monitoring on the power levels of the ESLs to guarantee stable operation thereof. In non-key scenarios or non-critical time periods, the ESL management device moderately reduces the power level management intensity for the ESLs to save resources.

During the power level maintenance process of the ESLs, the ESL management device may also cooperate with other related devices. For example, when the power levels of the ESLs are insufficient, the ESL management device communicates with a charging device to provide charging services for the ESLs. Meanwhile, the ESL management device may dynamically adjust the charging strategies according to the charging progress of the ESLs, so as to ensure the charging efficiency and safety thereof.

To sum up, performing power level management on the ESLs via the ESL management device can effectively guarantee normal operation of the ESLs. On this basis, the ESL management device may dynamically adjust power level management strategies according to the statuses and application scenarios of the ESLs, so as to realize intelligent management thereof. This helps improve the application effect of the ESLs and reduce the maintenance costs thereof.

In the embodiment, the ESL management device 1403 can grasp the remaining power level and position information of each ESL in real time by analyzing the ESL status information. The ESL management device 1403 can formulate corresponding power level management strategies for different ESLs according to such information. These strategies include but are not limited to:
1. For ESLs with low remaining power levels, the ESL management device 1403 can preferentially allocate energy harvesting and charging resources to ensure normal operation thereof.
2. For ESLs in remote positions, the ESL management device 1403 can adjust the charging mode and frequency thereof to reduce energy loss.
3. For ESLs that remain unused for a long time, the ESL management device 1403 can switch such ESLs to a sleep mode to lower power consumption.

In an embodiment, the ESL management device is specifically configured to:
determine the power level status, the ambient light intensity information and the positioning information of each ESL according to the ESL status information received from the ESL base station;
determine the charging priority of each ESL according to the power level status thereof;
determine a charging topology map for the ESLs according to the charging priority, the ambient light intensity information and the positioning information of each ESL using AI technology; and the charging topology map is used to show the charging sequence and the ESL power level management strategies of different ESLs; and
send the power level maintenance instruction to the ESL power level maintenance device according to the charging topology map for the ESLs, so as to perform power level maintenance on different ESLs.

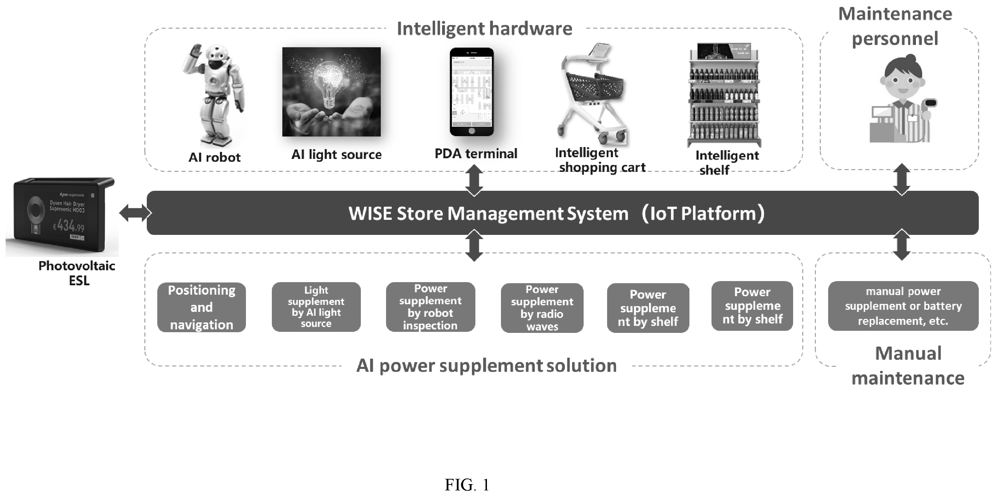

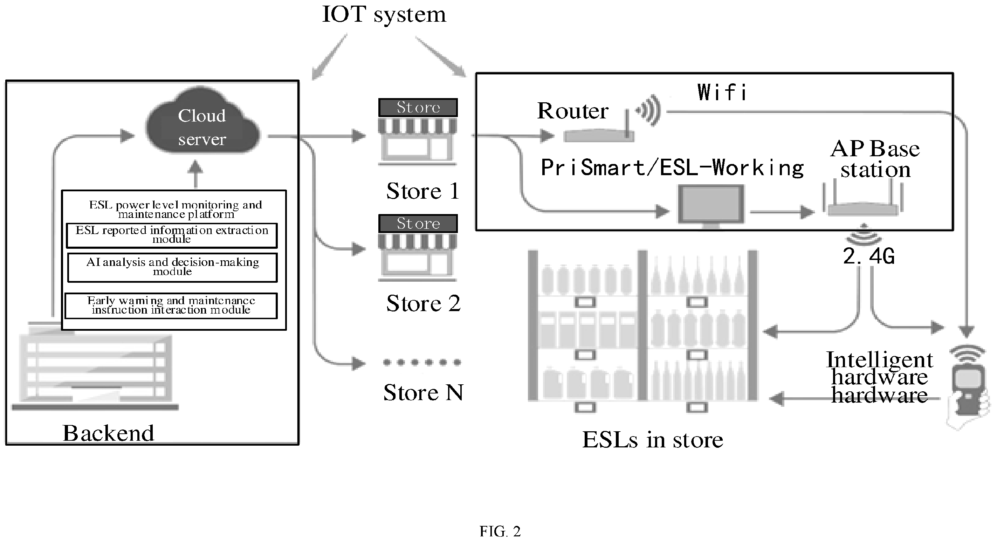

Taking a specific example, as illustrated in FIGS. 1 and 2, the management platform of the ESL system can be divided into the following layers:
1. Basic layer of an ESL application management system: SaaS cloud management platform;
2. Support layer of the ESL application management system: system API interface;
3. Renewable micro-energy ESL power level monitoring and maintenance platform, which mainly includes the following subsystems:
   3.1 ESL power level monitoring and maintenance platform;
   3.2 Photovoltaic ESL power level monitoring and maintenance system;
   3.3 Background system deployed on a cloud server or a local server, which mainly includes the following modules:
      3.3.1 ESL reported information extraction module;
      3.3.2 AI analysis and decision-making module;
      3.3.3 Early warning and maintenance instruction interaction module;
      3.3.4 Shelf and ESL position information service system.

Specifically, the ESL management device is implemented as follows.

First, the ESL management device determines the power level status and the positioning information of each ESL according to the ESL status information received from the ESL base station. The step mainly aims to obtain the real-time status of the ESLs, so as to provide a basis for subsequent charging management.

Second, the ESL management device determines the charging priority of each ESL according to the power level status thereof. The step mainly aims to ensure charging fairness and efficiency, and the charging priority can be determined based on factors such as the remaining power levels of the ESLs and device importance.

Next, based on the AI technology, the ESL management device determines the charging topology map for the ESLs according to the charging priority and the positioning information of each ESL. The charging topology map is a graphical representation displaying the charging sequence of different ESLs and the corresponding ESL power level management strategies, which helps managers to clearly grasp the charging progress and power level management strategies.

Finally, the ESL management device sends a power level maintenance instruction to the ESL power level maintenance device according to the charging topology map for the ESLs to perform power level maintenance on different ESLs. The step mainly aims to realize real-time charging management of the ESLs and ensure normal operation thereof. Specifically, the operation that the ESL management device sends a power level maintenance instruction to the ESL power level maintenance device according to the charging topology map for the ESLs to perform power level maintenance on different ESLs may be implemented as follows: the ESL management device determines the sending sequence of power level maintenance instructions to different ESL power level maintenance devices according to the charging sequence of different ESLs and/or power level management strategies contained in the charging topology map for the ESLs, and then sends the power level maintenance instructions to the ESL power level maintenance devices based on the sending sequence to perform power level maintenance on different ESLs. Further, the sending sequence of power level maintenance instructions to different ESL power level maintenance devices for example may be the charging sequence of different ESLs. Alternatively, index data indicating charging urgency can be determined based on the charging sequence of different ESLs and the corresponding power level management strategies, and the sending sequence of power level maintenance instructions to different ESL power level maintenance devices can be determined according to the index data (for example, a larger value of the index data indicates an earlier charging demand, and the corresponding sending sequence is arranged earlier).

To sum up, the ESL management device realizes intelligent management of the ESLs by receiving the ESL status information, determining the charging priorities, generating the charging topology map, and sending the power level maintenance instructions. This management mode not only improves the charging efficiency and reduces the risks during charging, but also provides users with a convenient experience of using the ESLs. In practical applications, the ESL management device can be widely applied to shopping malls, warehouses and other places requiring real-time commodity information management.

During implementation, the ESL power level maintenance device is configured to charge, according to the ESL power level management strategies and the ESL status information carried in the power level maintenance instruction, the ESLs by using different charging modes corresponding to the ESL power level management strategies. The charging modes include illuminating the ESLs with a light source, emitting radio energy, and near-field coupling charging.

During implementation, the ESL power level maintenance device firstly needs to obtain power level maintenance instructions for the ESLs. The instructions contain the power level management strategies and the status information of the ESLs. According to such information, the ESL power level maintenance device performs corresponding charging modes to charge the ESLs.

The charging modes mainly include three types: illuminating with a light source, emitting radio energy, and near-field coupling charging. The three charging modes have respective characteristics and can meet the charging demands of the ESLs under different scenarios.

The charging mode of illuminating with a light source charges the ESLs by utilizing energy from a light source. This charging mode exhibits strong environmental adaptability and can provide a stable charging source for the ESLs under sufficient illumination. In addition, the charging mode of illuminating with a light source is eco-friendly, since the light source may be natural light such as sunlight or artificial light such as LED lamps. This charging mode is applicable to outdoor environments or indoor environments with sufficient light.

The charging mode of emitting radio energy supplies charging energy to the ESLs by emitting radio waves. This charging mode requires no physical contact and can maintain stable charging performance at a relatively long distance. This charging mode boasts high flexibility and convenience and is applicable to various scenarios. For example, it can be applied to wireless charging between smart home devices and wireless charging for electric vehicles.

The charging mode of near-field coupling provides charging energy to the ESLs via a near-field magnetic field. This charging mode has the advantages of fast charging speed and high efficiency, and can realize efficient charging within a short distance. This charging mode is suitable for scenarios with high requirements for charging speed and efficiency, such as automatic charging devices on production lines and high-speed charging stations.

In practical applications, the ESL power level maintenance device flexibly selects an appropriate charging mode according to the actual conditions of the ESLs and environmental conditions. During charging, the device monitors the charging status of the ESLs in real time to ensure safe and effective charging. Meanwhile, through the connection with a cloud platform, the ESL power level maintenance device can continuously learn and optimize the charging strategies based on the AI technology, so as to improve the charging efficiency and reduce the charging costs.

To sum up, the ESL power level maintenance device provides efficient, safe and eco-friendly charging services for the ESLs through three charging modes: illuminating with a light source, emitting radio energy and near-field coupling. In practical applications, the ESL power level maintenance device can flexibly select an appropriate charging mode according to the actual demands of the ESLs and environmental conditions, so as to realize effective management of the power levels of the ESLs. This helps extend the service life of the ESLs, reduce the operation costs, and bring convenient intelligent experience to consumers and enterprises.

In the embodiment, after receiving the power level maintenance instruction, the ESL power level maintenance devices 1404 adopts corresponding charging mode to charge the ESL according to the actual conditions. The charging modes include:
1. Illuminating with a light source: light illuminates photovoltaic cells on the surfaces of the ESLs, and light energy is converted into electric energy for charging.
2. Emitting radio energy: radio waves are emitted to convert radio energy into electric energy for charging.
3. Near-field coupling: the near-field magnetic resonance principle is utilized to realize wireless charging between the ESLs and charging device.

In the embodiment, the ESLs integrated with multiple energy sources and various types of sensors, in combination with the background ESL power level monitoring and maintenance system integrated with the ESL management system, the ESL positioning and navigation system and the like, as well as various AI power level maintenance devices, can realize intelligent monitoring, management and maintenance on energy throughout the full life cycle of the ESLs. It should be noted that the present disclosure does not limit the types of the charging modes; that is, other charging modes may be included in addition to the above three.

In an embodiment, the ESL power level maintenance device includes an AI inspection robot;
the AI inspection robot includes:
a first ESL positioning module, configured to determine first ESLs to be charged according to the positioning information contained in the ESL status information carried in the power level maintenance instruction; and
a first charging module, configured to, when the AI inspection robot moves to the positions of the ESLs to be charged, invoke charging modes corresponding to the ESL power level management strategies carried in the power level maintenance instructions, so as to charge the first ESLs to be charged.

In present embodiment, the core of the ESL power level maintenance device is the AI inspection robot, which is provided with a plurality of functional modules, including a first ESL positioning module and a first charging module.

Firstly, the first ESL positioning module is configured to accurately position the first ESLs to be charged according to the ESL status information carried in the power level maintenance instruction. This positioning module can adopt various positioning technologies such as RFID, Bluetooth and Wi-Fi to ensure that the AI robot can accurately find the ESLs to be charged.

When the AI inspection robot moves to the position of the ESL to be charged, the first charging module takes effect. According to the ESL power level management strategy carried in the power level maintenance instruction, this module invokes the charging mode corresponding to ESL power level management strategy to charge the first ESLs to be charged. This charging mode may be a wireless charging mode, a wired charging mode or any other charging mode to meet the demands of different scenarios.

In addition, the ESL power level maintenance device may be further provided with other functional modules, such as a second ESL positioning module, a second charging module, and a data transmission module. These modules can work in coordination to further improve the charging efficiency and stability of the ESLs.

In practical applications, the ESL power level maintenance device can be widely applied to shopping malls, supermarkets, warehouses and other places. Regular inspection and charging performed by the AI inspection robot can ensure that the power levels of the ESLs are always maintained within an appropriate range, thereby guaranteeing normal operation of the ESLs. Meanwhile, the device can be combined with other intelligent systems, such as a commodity management system and a warehouse management system to realize intelligent and automatic charging management.

In the embodiment, the AI inspection robot and its charging modes provide an efficient and intelligent solution for power level maintenance on the ESLs. With continuous technological advancement in future development, the ESL power level maintenance device will be further perfected to deliver higher-quality services for various scenarios.

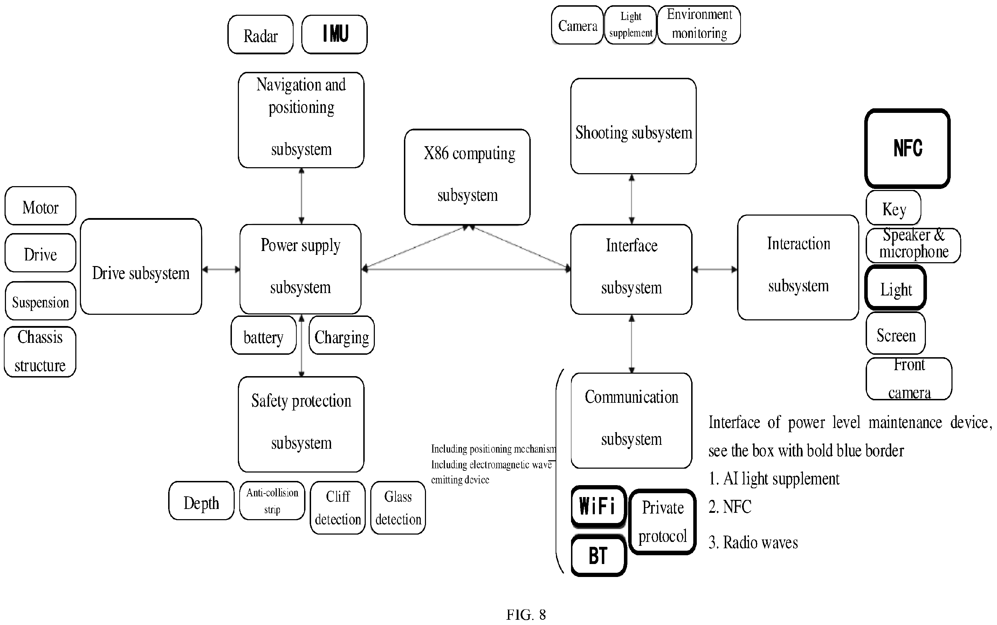

As a specific example, FIG.8 illustrates a system architecture of an AI inspection robot. Relevant contents including robot positioning and navigation, power supplement modes and main devices are described in detail as follows.

The robot positioning system (e.g., the first ESL positioning module is one of the constituent parts of the robot positioning system) is divided into two parts: an ESL communication positioning system and a robot navigation positioning subsystem. The ESL communication positioning system includes ESL devices or modules with positioning functions that support private protocols, BT or WiFi communication protocols. The robot navigation positioning subsystem adopts modes including radar-aided positioning, image-aided positioning and inertial navigation.

The charging mode of the AI inspection robot is as follows: the background server notifies the robot of the positions of ESLs requiring charging, and the robot performs map navigation accordingly. If one or more ESLs on a shelf need charging, the robot can confirm the positions thereof via their flashing light instructions or screen update instructions. If the power levels of the ESLs are insufficient to perform flashing light or screen refresh operations, the robot will take the following power supplement measures: uniformly perform light supplement for all the ESLs on the entire shelf, perform light supplement for each ESL that fails to flash lights or refresh screens, or perform power supplement for each ESL via near-field coupling, radio waves and the like. The light supplement duration may be adjusted according to the power levels of the ESLs.

In the X86 computing subsystem, a robot core processor module calculates a trajectory path and drives a robot drive subsystem, etc. according to background scheduling instructions, in combination with robot positioning information, target ESL position information and map data, so as to perform maintenance operations.

The energy output devices or interfaces for robot charging include: near-field coupling devices or interfaces such as NFC, robot-controlled light supplement lights, and radio wave transmitting interfaces.

In an embodiment, the ESL power level maintenance device includes an AI shopping cart;
the AI shopping cart includes:
a second ESL positioning module, configured to determine second ESLs to be charged within a preset range of the AI shopping cart according to the positioning information contained in the ESL status information carried in the power level maintenance instruction; and
a second charging module, configured to invoke charging modes corresponding to the ESL power level management strategies carried in the power level maintenance instruction during movement of the AI shopping cart, so as to charge all the second ESLs to be charged within the preset range of the AI shopping cart.

In present embodiment, the core part of the ESL power level maintenance device is the AI shopping cart which mainly consists of two components: a second ESL positioning module and a second charging module.

The second ESL positioning module is configured to accurately determine the positions of the second ESLs to be charged within the preset range of the AI shopping cart according to the ESL status information carried in the power level maintenance instruction. Smooth operation of this module ensures that the charging of the ESLs can be performed at accurate positions.

The second charging module is configured to invoke the charging mode corresponding to the ESL power level management strategy carried in the power level maintenance instruction during movement of the AI shopping cart, so as to charge all the second ESLs to be charged within the preset range. The operation of the second charging module ensures that the charging of the ESLs is performed in the preset strategy, thereby maximizing the service life of the ESLs.

In addition, the AI shopping cart further supports real-time power level monitoring, which can monitor the remaining power levels of the ESLs in real time to avoid overcharging or undercharging in the charging process. This function further improves the accuracy and safety of the charging of the ESLs.

To sum up, the ESL power level maintenance device according to this embodiment fully leverages the advantages of the AI shopping cart to realize accurate positioning and efficient charging of the ESLs, thereby effectively improving the operation efficiency and the lifetime of the ESLs.

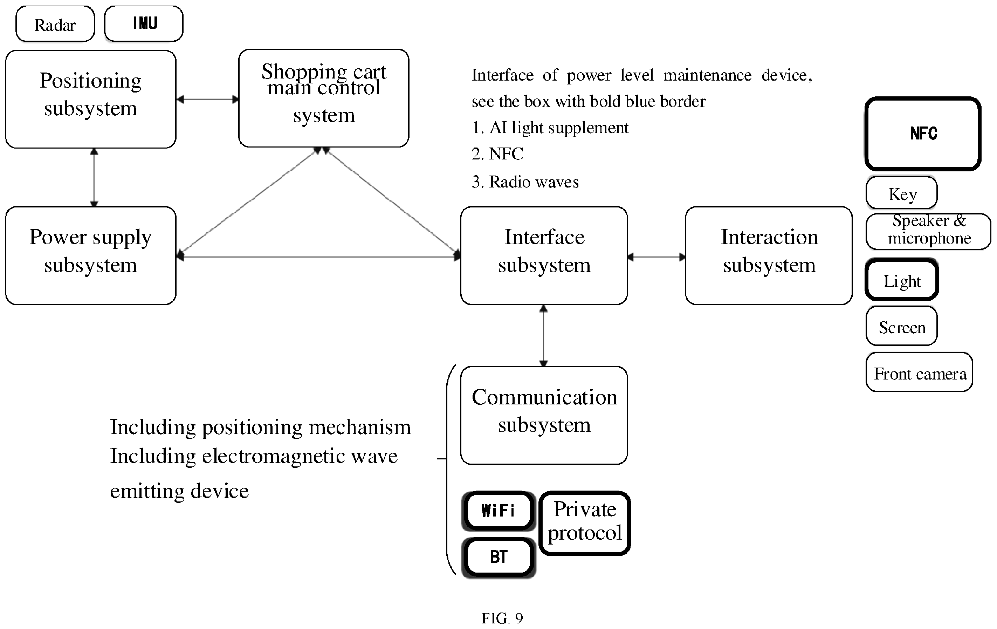

As an example, the system architecture of the AI shopping cart is illustrated in FIG. 9. Modules related to positioning and ESL charging devices are listed as follows.
1. The positioning modes of the AI shopping cart (e.g., the positioning mode of the second ESL positioning module) include two parts:
   an ESL communication positioning system, which includes ESL devices or modules supporting private protocols, BT or WiFi communication protocols with a positioning function; and
   a positioning subsystem composed of a radar-assisted positioning and an inertial positioning.
2. The main control system of the shopping cart: the system includes a core processor and a control module. According to the scheduling instruction from the background system, the main control system performs power level maintenance on neighboring ESLs around the shopping cart according to the positioning information of the AI shopping cart, the position information of the neighboring ESLs, the map data and the like.
3. The energy output devices or interfaces for the AI shopping cart charging: including near-field coupling devices or interfaces such as NFC, robot-controlled charging lights, radio emitting interfaces and the like.

To sum up, the system of the AI shopping cart realizes the functions including intelligent positioning of the AI shopping cart and charging of the ESLs through the coordinated operation of all the modules.

In an embodiment, the ESL power level maintenance device includes an AI light source;
the AI light source includes:
a third ESL positioning module, configured to determine third ESLs to be charged within a radiation range of the AI light source according to the positioning information contained in the ESL status information carried in the power level maintenance instruction; and
a third charging module, configured to invoke charging modes corresponding to ESL power level management strategies carried in the power level maintenance instruction, so as to charge the third ESLs to be charged within the radiation range of the AI light source.

In this embodiment, the core of the ESL power level maintenance device is the AI light source which mainly consists of two components: a third ESL positioning module and a third charging module.

The third ESL positioning module is configured to accurately determine the third ESLs to be charged within the radiation range of the AI light source according to the ESL status information carried in the power level maintenance instruction. This positioning module can obtain the position information of the ESLs by adopting various positioning technologies such as RFID, Bluetooth and Wi-Fi. In this way, the charging light source can accurately charge the ESLs to be charged, thereby avoiding resource waste and charging errors.

The third charging module is configured to select an appropriate charging mode to charge the third ESLs to be charged according to the ESL power level management strategy carried in the power level maintenance instruction. This charging module can be compatible with a plurality of charging modes such as wireless charging and USB charging to meet charging demands of different types of ESLs. Meanwhile, this charging module intelligently adjusts the charging power and the charging duration according to the real-time power level status and the charging demands of the ESLs so as to achieve optimal charging effects.

The working flow of the entire ESL power level maintenance device is as follows. First, the power level maintenance instruction containing the status information and the power level management strategy of the ESL is received. Second, the third ESL positioning module identifies the positions of the third ESL to be charged. Third, the third charging module charges the ESL according to the power level management strategy. Finally, the charging process is monitored to guarantee the charging safety and the charging effects.

In this way, the ESL power level maintenance device can realize intelligent management and charging of a large number of ESLs, which greatly improves the charging efficiency and reduces the operation costs. In addition, combined with big data and machine learning technologies, this device can analyze the charging behaviors and predict to further optimize the charging strategy and improve the utilization rate and the service quality of the charging devices.

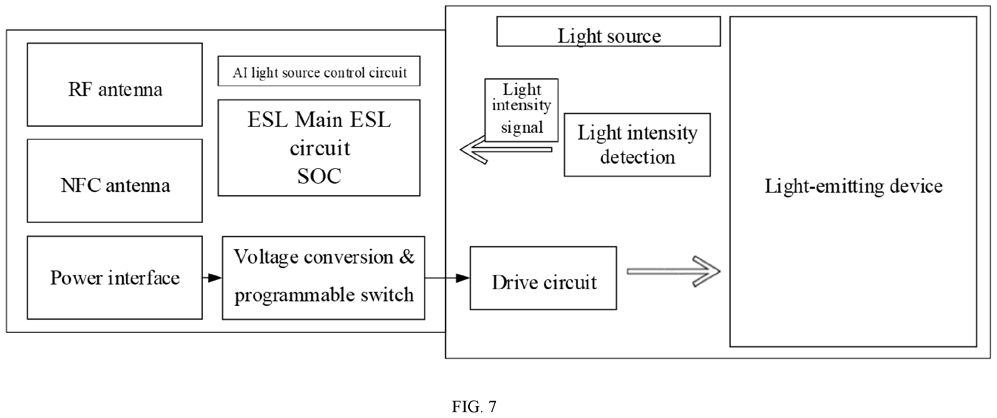

As a specific example, the implementation of the AI light source is illustrated in but not limited to FIG. 7. The AI light source device is monitored based on wireless communication protocols of the ESL system such as private protocols, Bluetooth (BT) and Wireless Fidelity (WiFi). The AI light source device is based on an ESL circuit, retains modules such as Radio Frequency (RF), Near Field Communication (NFC), as well as an embedded system-on-chip (ESL SoC) and related circuits, and is additionally provided with an external power interface, a voltage conversion circuit, a programmable control switch, a drive circuit, a light source device, etc. The AI light source device is positioned by means of an ESL communication positioning system, an intelligent shelf positioning system, store map information services, etc. Based on the above communication protocols, hardware systems, positioning systems and the like, AI intelligent supplemental lighting is realized through an ESL wireless communication system adopting private protocols, Bluetooth (BT) and Wireless Fidelity (WiFi).

In an embodiment, the ESL power level maintenance device includes an AI shelves;
each AI shelf includes:
a fourth ESL positioning module, configured to determine fourth ESLs to be charged on different AI shelves according to the positioning information contained in the ESL status information carried in the power level maintenance instruction; and
a fourth charging module, configured to invoke charging modes corresponding to the ESL power level management strategies carried in the power level maintenance instruction, so as to charge the fourth ESLs to be charged on different AI shelves.

First, the fourth ESL positioning module disposed on the AI shelf is configured to accurately position each ESL. By receiving the ESL status information carried in the power level maintenance instruction, the fourth ESL positioning module can quickly identify the ESLs to be charged and transmit the position information thereof to the charging module.

Second, the fourth charging module invokes the charging mode corresponding to the ESL power level management strategy to charge the fourth ESLs to be charged. Such flexible charging mode can be adjusted according to the actual power level and the charging demand of the ESL, which not only ensures the charging efficiency but also reduces the losses during charging.

In addition, the AI shelf is further provided with data analysis and remote monitoring functions. By analyzing the charging conditions and inventory data of the ESLs, the shelf can intelligently adjust the charging strategy and the inventory management strategy to achieve optimal operation effects. Meanwhile, such data can be remotely monitored in real time, such that merchants can timely grasp commodity inventory and the charging status and make reasonable decisions.

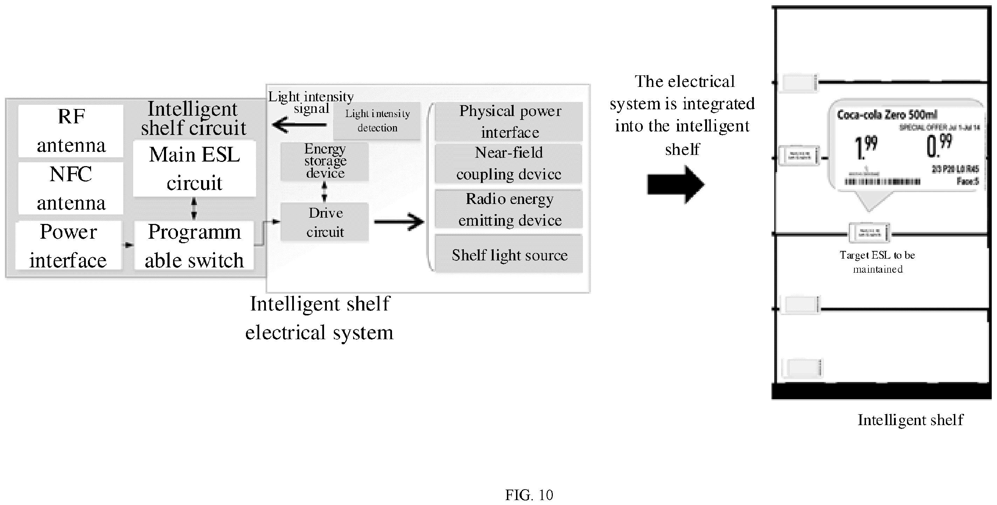

A specific example is given to illustrate the implementation of the AI shelf, as illustrated in FIG. 10. The electrical system and the typical physical appearance of the AI shelf include the following key devices or modules: a wireless communication system adopting private protocols, BT, WiFi and the like. The intelligent shelf device is based on an ESL circuit, retains modules such as RF and NFC, as well as an ESL SoC chip and related circuits, and is additionally provided with an external power interface, a voltage conversion circuit, a programmable control switch, a drive circuit and a supplementary light source, together with a near-field coupling power supply device, a radio energy emitting device, a physical power interface and the like. Both the shelf itself and each ESL are assigned a unique ID within the ESL system. Based on the ESL positioning system, the intelligent shelf positioning system, the store map information services and the like, the shelf realizes selfpositioning and establishes a binding relationship with the ESLs deployed thereon. On the basis of the above communication protocols, hardware systems, store positioning systems and the like, charging for the ESLs is realized via the intelligent shelf.

In an embodiment, intelligent hardware devices are used to realize power level maintenance on the ESLs, including but not limited to the following forms: an AI inspection robot, an AI light source, a PDA terminal device, an AI shopping cart and an AI shelve. These devices are provided with AI positioning or navigation functions, and are equipped with one or more of devices such as a remote control light source module, a radio energy emitting module, a near-field coupling module and the like.

The intelligent hardware devices play an important role in realizing power level maintenance on the ESLs. Several types of intelligent hardware devices and their application scenarios will be described in detail below.
1. The AI inspection robot, which can automatically detect the power levels of the ESLs on the shelf and transmit the detection results to the background management system in real time. Through data analysis, the administrator can timely grasp the power status of the ESLs in each area and send early warnings for the ESLs with insufficient power, so as to improve operation and maintenance efficiency. In addition, the AI inspection robot supports autonomous charging to keep sufficient power during long-term operation.
2. The AI light source, which not only provides a suitable lighting environment for the commodities, but also monitors the power levels of the ESLs in real time via a photosensitive sensor. When an energized ESL with insufficient power is detected, the AI light source can automatically adjust the light intensity to supply sufficient energy to the ESL. Meanwhile, the AI light source can cooperate with other intelligent hardware devices to realize intelligent regulation of light illumination and power level maintenance.
3. The PDA terminal device, which is portable and can be carried by staff at all times. The staff can check the power levels of the ESLs on site through the PDA terminal device and charge those with insufficient power as required. In addition, the PDA terminal device can synchronize data with the background management system in real time, such that the administrator can grasp the power status of the ESLs in each area.
4. The AI shopping cart, which has an intelligent charging function for automatically charging any ESL with insufficient power disposed thereon. Meanwhile, the AI shopping cart can monitor commodity information therein in real time and synchronize commodity data with power levels of the ESLs, which facilitates the administrator to conduct inventory management and commodity sales analysis.
5. The AI shelf is internally provided with a wireless charging module capable of supplying wireless charging to nearby ESLs. The AI shelf can automatically charge any ESL with insufficient power disposed thereon. In addition, the AI shelf can monitor the commodity inventory status via a sensor, and adjust commodity layouts in real time to improve the rationality of the commodity layouts.

By applying those intelligent hardware devices, it is possible to realize real-time monitoring and maintenance on the power levels of the ESLs to raise the level of commodity management. Meanwhile, such devices can cooperate with other intelligent hardware devices and system platforms to provide enterprises with more efficient and convenient intelligent solutions.

As an example, the intelligent hardware device (i.e., the aforementioned ESL power level maintenance device, hereinafter the same) includes one or more of the following devices:
1. The AI supplemental light devices, including but not limited to supplementary charging light source devices, radio wave emitting devices and the like;
2. The PDA terminal, including but not limited to near-field coupling charging devices, supplementary charging light source devices, radio wave emitting devices and the like;
3. The inspection robot, including but not limited to near-field coupling charging devices, supplementary charging light source devices, radio wave emitting devices and the like;
4. The intelligent shelf, including but not limited to near-field coupling charging devices, supplementary charging light source devices, radio wave emitting devices and the like;
5. The intelligent shopping cart, including but not limited to near-field coupling charging devices, supplementary charging light source devices, radio wave emitting devices and the like.

In addition, the embodiments of the present disclosure further relate to a manufacturing method of an ESL system, including the following steps:
1. Fabricating a plurality of ESLs, each of which is provided with a display screen for displaying the ESL content and an energy harvesting device, and the energy harvesting device is configured to harvest light energy and energy from other sources to charge the ESLs.
2. Configuring an ESL base station for receiving ESL status information and forwarding such information based on a preset communication protocol.
3. Providing an ESL management device for receiving the ESL status information forwarded by the base station, and sending power level maintenance instructions to the ESL power level maintenance devices according to different ESL power level management strategies.
4. The ESL power level maintenance devices charge different ESLs according to the received power level maintenance instructions. The charging modes include illuminating with a light source, emitting radio energy, and near-field coupling charging.
5. Performing intelligent light supplemental, inspection and charging maintenance on the ESLs to realize intelligent monitoring, management and maintenance on the energy of the ESLs throughout the full life cycle.
6. Carrying out regular inspection and maintenance on the ESLs to guarantee normal operation thereof.

By virtue of the above method, the ESLs according to the embodiments of the present disclosure achieve high accuracy and efficiency in power level management while reducing maintenance costs. In addition, the manufacturing system and method for the ESLs exhibit easy implementation and simple operation, and are applicable to various scenarios such as shopping malls and warehouses.

The embodiments of the present disclosure further provide applications of the ESL, including real-time commodity pricing, inventory management, promotional campaigns and the like. Relevant commodity information can be acquired in real time via the ESL management system and adjusted as required, which improves merchants' work efficiency and customer satisfaction.

To sum up, the embodiments of the present disclosure provide an ESL management system adopting light energy as the primary charging source and supporting multiple charging modes. This system realizes intelligent monitoring and management of the power levels of the ESLs, and improves the accuracy and efficiency of power level management. Meanwhile, the manufacturing method and system for the ESLs have the advantages of low cost and high reliability, and possess broad application prospects.

During implementation, the ESL power level maintenance system further includes an intelligent monitoring module configured to monitor the operation state of the ESLs in real time, timely detect and handle potential faults, and ensure stable operation of the system. The intelligent monitoring module can monitor the power level, signal strength, hardware status and other parameters of the ESLs, and send an alarm to the ESL management device when an abnormality is detected to facilitate timely processing.

The ESL power level maintenance system may further include a data processing module configured to analyze and process the collected ESL status information, charging data and the like to optimize the charging strategies and improve the charging efficiency. The data processing module can adjust the charging priority and the charging mode of the ESLs in real time through statistical analysis, machine learning and the like, so as to achieve more accurate power level management.

The ESL power level maintenance system may further include a remote upgrade module configured to remotely update and upgrade software and firmware of the ESLs. The remote upgrade module can send new functions and optimization schemes to the ESLs regularly or irregularly according to the actual operating status and demands of the ESLs, so as to improve the operation experience and performance thereof.

The ESL power level maintenance system may further include a user interaction module configured to interact with users in real time and provide a convenient operation interface and information feedback. The user interaction module may adopt technologies including a touch screen, voice recognition, virtual reality and the like, such that the users can easily grasp the charging status and related information of the ESLs.

The ESL power level maintenance system may further include a security protection module configured to guarantee the safe operation of the ESLs and the system. The security protection module may support the functions including data encryption, permission control, fault diagnosis and the like to prevent unauthorized access and operation, and ensure the security and integrity of the data of the ESLs.

Through the coordinated operation of the above modules, the ESL power level maintenance system can realize the real-time monitoring, intelligent charging and precise management of a large quantity of ESLs, prolong the operation life and enhance the performance of the ESLs, reduce the operation costs, and deliver a convenient and efficient shopping experience for users. Meanwhile, the system can continuously optimize and improve its functions in accordance with market demands and user feedback to adapt to constantly changing environments and requirements.

A specific embodiment is provided below to illustrate the specific application of the method of the present disclosure, and such embodiment may include the following steps:
The power level monitoring and maintenance platform of the photovoltaic ESL mainly includes an AI analysis and decision-making module, which analyzes data information reported by the ESLs, and automatically generates early warning and maintenance schemes for the reporting ESLs or ESL clusters according to various preset big data parameters and strategies stored in the platform.
1) The platform is disposed in an ESL service system, and its core is a background program deployed in a cloud server or a local server (the ESL power level monitoring and maintenance platform within the ESL service system), which mainly includes the following components.
   a) An ESL reported information extraction module, which decodes and extracts data including the type of the energy storage device type, sampled temperature data, the identification of solar cell type, illuminance data and the like reported by the ESLs via wireless communication protocols such as private protocols, BT and WiFi.
   b) The AI analysis and decision-making module, which analyzes the data information reported by the ESLs, and automatically generates early warning and maintenance schemes for the reporting ESLs or ESL clusters according to various preset big data parameters and strategies stored in the platform. The details are as follows.

The ESLs actively report parameters such as voltage or power level to the background server, or predict the duration until low power is reached. The data analysis module of the background server screens out ESLs approaching low power according to a voltage threshold, a power level threshold, a low-power duration threshold or the like. The background server combines the physical positions of these ESLs to sort out shelves and shelf aisles requiring power supplement. The number of ESLs requiring power supplement on each shelf serves as the basis of the sorting algorithm, and the total number of ESLs requiring power supplement on all shelves within an aisle serves as the basis of the aisle sorting algorithm. The decision-making system integrates a plurality of sorting results, selects a sorting mode including shelf-based sorting, aisle-based sorting, or aislefirst-then-shelf sorting, and determines the priority areas for power supplement.

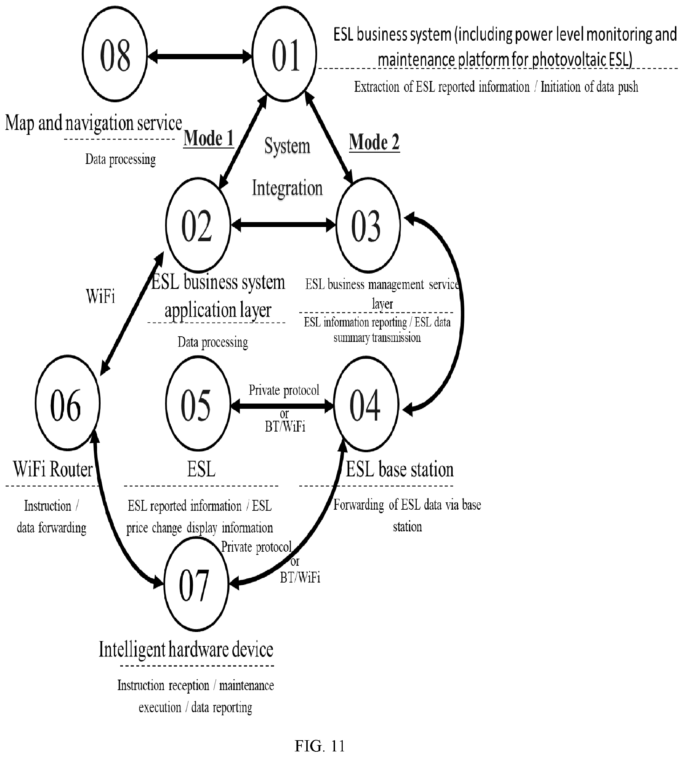

An early warning and maintenance instruction interaction module, which is responsible for scheduling and monitoring early warning and maintenance operations of various ESLs and corresponding hardware devices for the intelligent power level maintenance according to the early warning and maintenance schemes generated by the AI analysis and decision-making module.
c) The ESL power level monitoring and maintenance platform is typically deployed on a cloud server or local server where the ESL service management system is located (as illustrated in FIG. 2).
d) The intelligent service system of the ESL power level monitoring and maintenance platform has a typical architecture as illustrated in FIG. 11. The intelligent service system of the ESL power level monitoring and maintenance platform is an embedded subsystem of the ESL management system, and monitors and schedules lower-layer devices of the ESL system via the service layer interfaces and application layer interfaces of the ESLs.

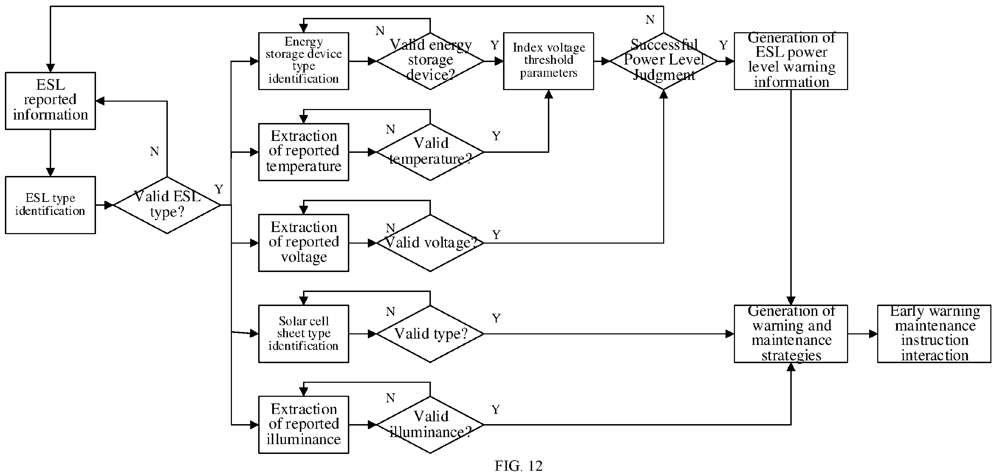

2) The information extraction and intelligent analysis & decision-making process of the ESL power level monitoring and maintenance platform is illustrated in FIG. 12.
a) The platform receives information reported by the ESLs or other devices, including ambient light intensity information, voltage or power level of the energy storage device, voltage or power level of the backup battery, position parameters, radio transceiving parameters and the like, identifies the status information of ESLs, and generates corresponding maintenance strategies according to preset maintenance strategies or parameters.
b) The ESL power level monitoring and maintenance platform generates specific ESL power level maintenance schemes according to the generated maintenance strategies, the preset map information and navigation services stored in the system, the built-in ESL positioning system, the positioning information of the ESL, the positioning information of the AI device and the like. The maintenance schemes include but are not limited to the following modes.
   1. Intelligent light source devices near photovoltaic ESLs requiring power level maintenance are scheduled to perform ambient light supplement, so as to increase energy collected by the photovoltaic ESLs, i.e., boost the collected electric energy.
   2. Map information, position information, navigation paths and the like are transmitted to the AI inspection robot, the AI inspection robot is scheduled to travel to a target ESL, and power level maintenance is carried out thereon via multiple modes such as light supplement, radio energy emitting and near-field coupling.
   3. The intelligent shopping cart is scheduled to match the positioning information thereof with the position of the target ESL to be maintained. When the intelligent shopping cart arrives at a position close to the target ESL requiring power level maintenance, the power level maintenance is performed on the target ESL via multiple modes such as light supplement, radio energy emitting and near-field coupling.
   4. When the photovoltaic ESLs are deployed on the intelligent shelves with the power level maintenance function, the intelligent shelves where the ESLs requiring power level maintenance are located are scheduled according to the positioning information thereof, and power level maintenance is implemented for the photovoltaic ESLs requiring power level maintenance via multiple modes such as light supplement, radio energy emitting and near-field coupling.
   5. The map information, position information, navigation paths and the like are delivered to the ESL maintenance personnel. The ESL maintenance personnel proceed to the target ESL requiring power level maintenance, and perform power level maintenance thereon through devices such as PDA by means of wired direct charging, light supplement, radio energy emitting, near-field coupling and the like.
      The information extraction and intelligent analysis & decision-making process of the ESL power level monitoring and maintenance platform in FIG. 12 further includes the following steps.
c) The ESL power level monitoring and maintenance platform conducts real-time monitoring on the maintained ESLs, collects data including operating status, ambient light intensity and power level of the ESLs, and evaluates the maintenance effect. Based on the evaluation results, the platform optimizes the maintenance strategies to improve the power level maintenance performance.
d) The platform accumulates relevant data and experience generated during maintenance to build maintenance knowledge bases. Such knowledge bases can be adopted to optimize existing maintenance strategies and improve the maintenance efficiency, and can also provide references for the power level maintenance on ESLs in other similar scenarios.
e) The ESL power level monitoring and maintenance platform continuously learns and optimizes itself to adapt to changing environments and varying ESL demands. Continuous optimization enables more intelligent and automatic power level maintenance, reduces the labor costs and improves the service quality.
f) The platform can also be integrated with other intelligent systems such as intelligent warehousing and logistics management systems to realize full intelligent management of the ESLs. Data sharing and coordinated operation help improve the efficiency and competitiveness of the entire supply chain.

To sum up, the ESL power level monitoring and maintenance platform realizes intelligent maintenance on the ESLs through information extraction, intelligent analysis & decision-making and real-time monitoring. This not only enhances the stability and reliability of the ESLs, but also reduces the operation costs and improves the service quality for retail enterprises. With continuous technological development and optimization, the ESL power level monitoring and maintenance platform will have broader application prospects.

3) A store shelf and ESL position information service module is illustrated in FIG. 13. In the application environment, the shelf information can be displayed via a floor plan with a specific scale, and the shelves and aisles are each marked with a corresponding number. The position of each corresponding shelf on the map can be determined according to the marked coordinate information. Positioning of the ESL system usually relies on wireless communication technologies such as private protocols, Bluetooth and WiFi as well as positioning algorithms to track and locate the exact positions and movement status of the ESLs. A neighbor-based positioning algorithm can efficiently realize precise positioning of the ESLs in shopping malls. Such system enables merchants to achieve precise control and management of the ESLs within stores, thereby covering the aspects such as positioning, quotation update, inventory management.

A position information service module provides a method and system for realizing precise positioning of ESLs in shopping malls by adopting a neighbor-based positioning algorithm. For example, the system can determine the relative positions between ESLs by analyzing communication signal strength among ESLs and signal strength between ESLs and base stations, so as to achieve precise positioning without additional hardware.

### a) System architecture and working process

ESL devices: each ESL device is capable of sending and receiving signals, and can store and process data.

Map service unit: responsible for coordinating information exchange and position information update of the ESLs, and generating and updating the ESL distribution map of shopping malls according to the collected positioning data.

Positioning algorithm unit: the algorithm calculates the relative distances between the ESL devices by measuring the signal strength among these devices, and then constructs a topological graph of the devices based on such distance information.

### b) System working process

Signal exchange: the ESL devices send signals periodically and record the strength of the signal received from other ESL devices.

Distance calculation: the positioning algorithm unit collects and processes signal strength data acquired by each ESL device, and calculates the relative distances between the ESL devices via the neighbor-based positioning algorithm.

Topology generation: the map service unit generates a topological graph of the ESL devices according to the calculated relative distances to determine the position of each ESL device.

Movement monitoring: the positioning algorithm unit compares and analyzes the previously received data based on changes in surrounding information of the ESL devices to determine the movement status of the ESLs, and ensures that each ESL displays correct position information.

After the ESLs are precisely positioned in shopping malls, their application value can be fully realized. Merchants can optimize and adjust commodity display, promotional activities, inventory management and other aspects based on real-time data feedback. In addition, the system may further expand its functions as follows.
1. Customer navigation function: based on precise positioning of the ESLs, the system can analyze customers' walking routes and stay positions inside shopping malls, so as to provide merchants with references for optimizing the store layout and improving the customers' shopping experience. Meanwhile, by analyzing customers' shopping behaviors, personalized promotional information and navigation services can be provided to customers.
2. Intelligent inventory management: by real-time monitoring the position information of the ESLs, merchants can grasp the commodity inventory status and timely replenish commodities to avoid stockouts. Further, combined with sales data, merchants can analyze hot-selling and slowmoving commodities, adjust commodity structures accordingly and boost sales volume.
3. Energy conservation and emission reduction: shopping malls can intelligently control the switching and power of lighting, air conditioning and other devices by analyzing real-time passenger flow and activity status in areas where the ESLs are deployed, so as to achieve the goals of energy conservation and emission reduction.
4. Safety monitoring: with the precise positioning technology of the ESLs, shopping malls can grasp real-time personnel distribution and improve safety management capacity. In case of emergencies, the positions of trapped personnel can be quickly determined via the ESL system to improve rescue efficiency.
5. Data analysis: the system can accumulate operation data of shopping malls, which serves as a basis for merchants to conduct in-depth market analysis and optimize business strategies. For example, the analysis of passenger flow in different time periods and areas can help merchants formulate reasonable business hours and staffing allocation strategies.

The ESL precise positioning system based on the neighbor-based positioning algorithm boasts broad application prospects in shopping malls. Continuous optimization and improvement of system functions can provide merchants with more efficient and convenient management tools, and improve the overall operation level of shopping malls, thereby maximizing commercial value. Meanwhile, the system also helps improve customers' shopping experience and advance the sustainable development of the shopping mall industry. Looking ahead, we expect this technology to be widely applied in more fields and bring convenience to people's daily lives.

In this specific embodiment, the photovoltaic ESL power level monitoring and maintenance platform (a part of the ESL management system) deployed in a cloud server or local server has the following composition and operation modes:
the platform extracts data reported by the ESLs, and based on an ESL wireless communication system, decodes and extracts the data reported by the ESLs, including the type of the energy storage device, the sampled temperature data, the identification of solar cell type, and the illuminance data;
the AI analysis and decision-making module: the platform analyzes the data reported by the ESLs, and automatically generates early warning and maintenance schemes for the reporting ESLs or ESL clusters according to various preset big data parameters and strategies, position map information, AI device lists and functions stored in the platform;
the early warning and maintenance instruction interaction module: in accordance with the early warning and maintenance schemes generated by the AI analysis and decision-making module, this module sends targeted early warning and maintenance operation instructions to various ESLs and intelligent power level maintenance hardware devices for ESLs (note: the communication system may adopt private protocols, BT or WiFi);
all types of ESLs and intelligent ESL power level maintenance devices receive early warning information and maintenance instructions, and perform operations including power level status reporting and feedback, executing maintenance early warning actions, as well as display and reporting of maintenance progress status;
the operation mode of the AI devices participating in ESL power intelligent early warning and maintenance: based on private protocols, BT or WiFi communication protocols and under the scheduling of the ESL service system, the ESL communication system, the ESL positioning and navigation system and the ESL deployment map information system jointly enable the AI light source, the AI inspection robot, the AI shopping cart, the AI shelf, the PDA terminal and the like to implement the power level maintenance on the target ESLs;
the implementation of the AI devices for ESL power intelligent early warning and maintenance: various AI power level maintenance devices can integrate a plurality of micro-energy transmission devices such as intelligent light supplement device, wireless power transmission device, coupled power transmission device and vibration energy transmission device to supplement power for the ESLs;
the implementation of the photovoltaic ESLs: one or more of a solar cell, an energy harvesting and conversion circuit, a light intensity detection circuit, a near-field coupling circuit such as NFC, a radio energy harvesting circuit, a backup battery and the like are integrated onto the existing ESLs; as a result, the ESLs mainly rely on light energy for power supply, and can also support other power supply modes including other micro-energy harvesting and the backup battery.

The operation process and the implementation method of the photovoltaic ESL power level monitoring and maintenance platform are illustrated by examples as follows.
I. Platform data processing and analysis
   1. Data collection: the platform receives wireless communication data from the ESLs, including information such as the type of the energy storage device, the sampled temperature, the type of the solar cell, illuminance and the like.
   2. Data decoding: the platform parses the wireless communication data and extracts the key information.
   3. Data analysis: the platform performs intelligent analysis on the extracted information according to the preset big data parameters, strategies, position map information, AI device lists and functions stored in the platform.
   4. Generation of early warning and maintenance schemes: the platform automatically generates early warning and maintenance schemes for a single or a plurality of ESLs according to the analysis results.
II. Early warning and maintenance instruction interaction
   1. Sending of the early warning and maintenance instructions: the early warning and maintenance instruction interaction module sends early warning information and maintenance operation instructions to various ESLs and intelligent maintenance devices according to the generated early warning and maintenance schemes.
   2. Reception of feedback information: after receiving the early warning information and maintenance instructions, various ESLs and intelligent maintenance devices perform operations including power level status reporting and feedback, execution of maintenance early warning actions, as well as display and reporting of the maintenance progress status.
III. Operation modes of the AI devices
   1. Positioning and navigation: according to private protocols, BT or WiFi communication protocols and combined with the information from the ESL communication system, the ESL positioning and navigation system, etc., the AI devices realize precise positioning of target ESLs.
   2. Power level maintenance: under the scheduling of the ESL service system, the AI light source, the AI inspection robot, the AI shopping cart, the AI shelves, the PDA terminal and other devices perform corresponding power level maintenance operations according to the early warning and maintenance schemes.
IV. Implementation of the ESLs
   1. Integration of the solar cell and the energy harvesting and conversion circuit: the solar cell and other energy harvesting devices are integrated onto the existing ESLs, so that light energy serves as the main energy source.
   2. Support for a plurality of energy sources: the ESLs can also support various energy sources such as other micro-energy harvesting and backup batteries.
V. Application scenarios of the photovoltaic ESLs
   1. Retail Industry: the photovoltaic ESLs can be applied to commodity price display, inventory management, promotional activities and other aspects to realize intelligent and energy-saving commodity information management.
   2. Logistics Industry: the photovoltaic ESLs can be used for logistics package tracking, traceability, temperature monitoring, etc., so as to improve the logistics efficiency and reduce the operation costs.
   3. Industrial production: the photovoltaic ESLs can be used for device status monitoring and material tracking on production lines, which facilitates intelligent upgrading of the industry.
   4. Smart home: Photovoltaic ESLs can be used for control and interconnection of smart devices such as household electrical appliances and furniture, so as to realize rational utilization of energy in a smart home system.

Through the implementation of the photovoltaic ESL power level monitoring and maintenance platform, it is possible to realize intelligent management of the ESLs, reduce operation costs and improve management efficiency. Meanwhile, it is conducive to energy conservation and emission reduction and promotes sustainable development. In future development, the photovoltaic ESL power level monitoring and maintenance platform is expected to play an important role in more industries and fields.

The ESL integrates components such as the solar cell, the energy harvesting and conversion circuit, the light intensity detection circuit, the near-field coupling circuit such as NFC, the radio energy harvesting circuit and the backup battery, thereby realizing functions of collecting ambient light intensity and monitoring key information such as its own voltage or the power level. Such information is transmitted to the ESL power level monitoring and maintenance platform via a communication system adopting private protocols, BT or WiFi. The platform counts and analyzes the received data, and intelligently schedules the AI devices to perform dynamic light environment maintenance and automatic power level maintenance on the ESLs according to preset strategies, position maps and the wireless positioning information of the ESLs.

Of course, it should be understood that the above process may have other modifications, which fall within the protection scope of the present disclosure.

In the embodiments of the present disclosure, a plurality of ESLs are provided, each configured to display ESL content, charge the respective ESL by harvesting and converting light energy and energy from other sources, and collect and report ESL status information thereof; the ESL status information includes remaining power level information, ambient light intensity information and positioning information; the energy from other sources is one or any combination of vibration micro-energy, radio micro-energy, temperature difference micro-energy and battery energy; an ESL base station is configured to forward the ESL status information received from the plurality of ESLs based on preset communication protocols; an ESL management device is configured to send a power level maintenance instruction to an ESL power level maintenance device according to the ESL status information received from the ESL base station and based on different ESL power level management strategies, so as to perform power level maintenance on different ESLs; the ESL power level maintenance device is configured to charge, according to the ESL power level management strategies and the ESL status information carried in the power level maintenance instruction, the ESLs by using different charging modes corresponding to the ESL power level management strategies; and the charging modes include illuminating the ESLs with a light source, emitting radio energy, and near-field coupling charging. Compared with the conventional solutions in the prior art where the ESL power level can only be maintained and managed manually, the technical solution proposed in the embodiments of the present disclosure adopts the ESLs mainly powered by light energy and compatible with other micro-energy sources. In combination with the ESL management device, this technical solution conducts power level management and maintenance on the ESLs by means of various ESL power level maintenance devices in multiple modes, thereby avoiding errors and omissions easily caused by manual ESL power level maintenance and management in the prior art, and improving the accuracy and efficiency of ESL power level management. Meanwhile, based on preset ESL power level management strategies, it is possible to perform intelligent light supplement, inspection and charging maintenance on the ESLs in different charging modes corresponding to the ESL power level management strategies, thereby realizing intelligent monitoring, management and maintenance on the energy for the ESLs throughout the full life cycle, prolonging the service life and reducing the maintenance cost thereof.

As mentioned above, the present disclosure constructs an intelligent power level monitoring and maintenance system for large-scale ESL clusters powered by light energy and other micro-energy sources. Assisted by intelligent light source devices, AI inspection robots, AI shelves, ambient light monitoring devices or circuits integrated in the ESLs, etc., the system completes intelligent monitoring and maintenance on power level of renewable micro-energy ESLs. A photosensitive sensor, a power level monitoring circuit and the like are integrated in each ESL to report the internal status information to the monitoring and maintenance system platform. This platform schedules external AI devices or staff according to preset strategies to perform maintenance operations including power level early warning, intelligent light supplement, inspection and charging for the micro-energy ESLs powered by light energy and other sources, so as to prevent these ESLs from failing due to insufficient remaining power level.

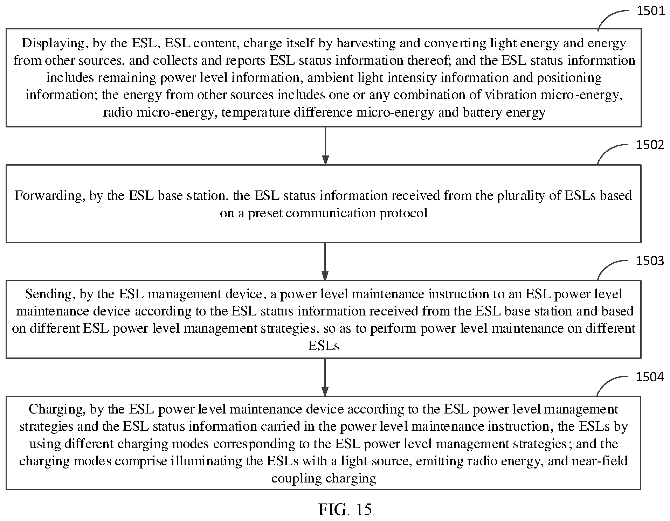

An embodiment of the present disclosure further provides a power level management method for ESLs, which is applied to the aforementioned power level management system for the ESLs, so as to improve the accuracy and efficiency of ESL power level management, prolong the service life and reduce the maintenance cost of ESLs. As illustrated in FIG. 15, the method includes:
Step 1501: displaying, by the ESL, ESL content, charge itself by harvesting and converting light energy and energy from other sources, and collects and reports ESL status information thereof; and the ESL status information includes remaining power level information, ambient light intensity information and positioning information; the energy from other sources includes one or any combination of vibration micro-energy, radio micro-energy, temperature difference micro-energy and battery energy;
Step 1502: forwarding, by the ESL base station, the ESL status information received from the plurality of ESLs based on a preset communication protocol;
Step 1503: sending, by the ESL management device, a power level maintenance instruction to an ESL power level maintenance device according to the ESL status information received from the ESL base station and based on different ESL power level management strategies, so as to perform power level maintenance on different ESLs; and
Step 1504: charging, by the ESL power level maintenance device according to the ESL power level management strategies and the ESL status information carried in the power level maintenance instruction, the ESLs by using different charging modes corresponding to the ESL power level management strategies; and the charging modes comprise illuminating the ESLs with a light source, emitting radio energy, and near-field coupling charging.

In an embodiment, the ESL includes a control module, a positioning module, an ambient light intensity monitoring module, an energy storage device, a micro-energy charging circuit, a communication module and a solar cell sheet;
the positioning module is configured to determine the positioning information of the ESL;
the ambient light intensity monitoring module is configured to monitor ambient light intensity around the ESL;
the solar cell sheet is configured to harvest and convert light energy to charge the energy storage device, where the light energy includes ambient light and sunlight;
the micro-energy charging circuit is configured to harvest and convert vibration micro-energy, radio micro-energy and temperature difference micro-energy to charge the energy storage device;
the control module is configured to determine the remaining power level information of the ESL according to collected power-related parameters internal the ESL; and
the communication module is configured to report the remaining power level information, the ambient light intensity information and the positioning information of the ESL.

In an embodiment, the control module is specifically configured to:
determine, if the ESL is in an operating status, the remaining power level information of the ESL based on a load voltage parameter of an energy storage module of the ESL and a preset relationship between load voltage parameters and remaining power level information;
determine, if the ESL is in a non-operating status, the remaining power level information of the ESL based on an open-circuit voltage parameter of the energy storage module of the ESL and a preset relationship between open-circuit voltage parameters and remaining power level information;
and/or determine the remaining power level information of the ESL based on a voltage difference between the open-circuit voltage parameter and the load voltage parameter of the energy storage module of the ESL and a preset relationship between voltage differences and remaining power level information;
and/or integrate current consumption generated by executing instruction operations by the ESL to obtain power consumption generated by ESL performing the instruction operations, and determine the remaining power level information of the ESL based on the power consumption.

In an embodiment, the ESL management device is specifically configured to:
determine the power level status, the ambient light intensity information and the positioning information of each ESL according to the ESL status information received from the ESL base station;
determine the charging priority of each ESL according to the power level status thereof;
determine a charging topology map for the ESLs according to the charging priority, the ambient light intensity information and the positioning information of each ESL using AI technology; and the charging topology map is used to show the charging sequence and the ESL power level management strategies of different ESLs; and
send the power level maintenance instruction to the ESL power level maintenance devices according to the charging topology map for the ESLs, so as to perform power level maintenance on different ESLs.

In an embodiment, the ESL power level maintenance device includes an AI inspection robot;
the AI inspection robot includes:
a first ESL positioning module, configured to determine first ESLs to be charged according to the positioning information contained in the ESL status information carried in the power level maintenance instruction; and
a first charging module, configured to, when the AI inspection robot moves to the positions of the ESLs to be charged, invoke charging modes corresponding to the ESL power level management strategies carried in the power level maintenance instruction, so as to charge the first ESLs to be charged.

In an embodiment, the ESL power level maintenance device includes an AI shopping cart;
the AI shopping cart includes:
a second ESL positioning module, configured to determine second ESLs to be charged within a preset range of the AI shopping cart according to the positioning information contained in the ESL status information carried in the power level maintenance instruction; and
a second charging module, configured to invoke charging modes corresponding to the ESL power level management strategies carried in the power level maintenance instruction during movement of the AI shopping cart, so as to charge all the second ESLs to be charged within the preset range of the AI shopping cart.

In an embodiment, the ESL power level maintenance device includes an AI light source;
the AI light source includes:
a third ESL positioning module, configured to determine third ESLs to be charged within a radiation range of the AI light source according to the positioning information contained in the ESL status information carried in the power level maintenance instruction; and
a third charging module, configured to invoke charging modes corresponding to ESL power level management strategies carried in the power level maintenance instruction, so as to charge the third ESLs to be charged within the radiation range of the AI light source.

In an embodiment, the ESL power level maintenance device includes AI shelves;
each AI shelf includes:
a fourth ESL positioning module, configured to determine fourth ESLs to be charged on different AI shelves according to the positioning information contained in the ESL status information carried in the power level maintenance instruction; and
a fourth charging module, configured to invoke charging modes corresponding to the ESL power level management strategies carried in the power level maintenance instruction, so as to charge the fourth ESLs to be charged on different AI shelves.

In an embodiment, the charging modes of the ESLs further include a wireless charging mode, by which the ESLs are charged via a wireless charging circuit. The wireless charging circuit includes a charging sender, a charging receiver and a charging controller. The charging sender is configured to emit radio energy, the charging receiver is configured to receive the radio energy, and the charging controller is configured to control the wireless charging process.

In an embodiment, the ESL management device further includes a power level prediction module and a charging planning module. The power prediction module is configured to predict the future power level status of the ESLs according to remaining power level information, historical charging data and charging strategies of the ESLs. The charging planning module is configured to formulate charging plans based on the power level prediction results to optimize the charging process of the ESLs.

In an embodiment, the ESL power level maintenance device further includes an intelligent scheduling system, which automatically schedules the ESLs for charging according to the charging plans and the real-time charging status of the ESLs. The intelligent scheduling system includes a charging scheduling module, a charging priority module and a charging control module.

The charging scheduling module is configured to schedule the ESLs for charging according to the charging plans; the charging priority module is configured to determine a charging sequence according to a charging priority of each ESL; the charging control module is configured to control the charging process of the ESLs according to the charging scheduling and the charging priority.

In an embodiment, the ESL power level maintenance device further includes a data processing unit configured to process charging data of the ESLs and supply the processed data to an AI system for analysis and decision-making. The data processing unit includes a data collection module, a data storage module and a data transmission module.

The data collection module is configured to collect real-time charging status, power level information and positioning information of the ESLs; the data storage module is configured to store historical charging data and real-time charging status of the ESLs; and the data transmission module is configured to transmit the charging data to the AI system for analysis and decision-making.

An embodiment of the present disclosure provides a computer device for implementing all or part of the foregoing power level management method for ESLs. The computer device according to the embodiment specifically includes:
a processor, a memory, a communications interface and a bus. The processor, the memory and the communications interface communicate with one another via the bus. The communications interface is configured to transmit information between related devices. The computer device may be a desktop computer, a tablet computer, a mobile terminal or the like, and this embodiment is not limited thereto. In this embodiment, the computer device may be implemented with reference to the foregoing embodiments of the power level management method for ESLs and the power level management apparatus for ESL, the contents of which are incorporated herein, and repeated descriptions are omitted.

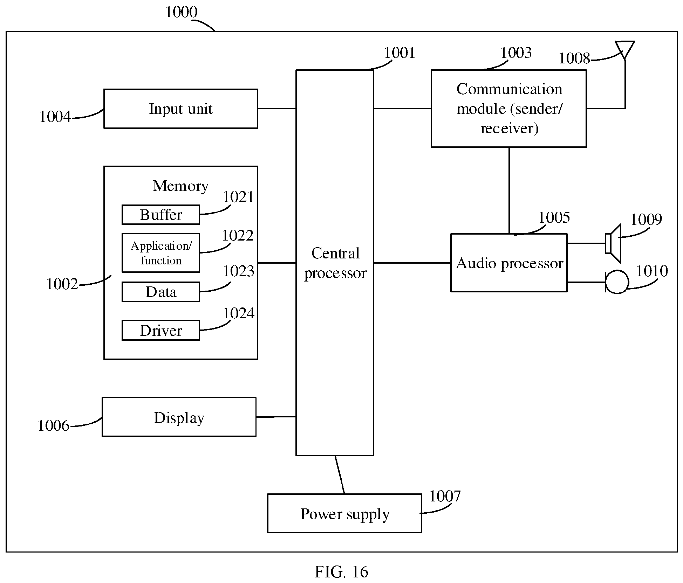

FIG. 16 illustrates a schematic block diagram of system structure of a computer device 1000 according to an embodiment of the present disclosure. As illustrated in FIG. 16, the computer device 1000 may include a central processor 1001 and a memory 1002 coupled thereto. It should be noted that FIG. 16 is merely illustrative, and any other type of structure may be adopted to supplement or replace this structure to realize telecommunication functions or other functions.

In an embodiment, the ESL power level management function may be integrated into the central processor 1001, which may be configured to perform the following control processes:
displaying, by the ESL, ESL content, charge itself by harvesting and converting light energy and energy from other sources, and collect and report ESL status information thereof; and the ESL status information comprises remaining power level information, ambient light intensity information and positioning information; the energy from other sources comprises one or any combination of vibration micro-energy, radio micro-energy, temperature difference micro-energy and battery energy;
forwarding, by the ESL base station, the ESL status information received from the plurality of ESLs based on a preset communication protocol;
sending, by the ESL management device, a power level maintenance instruction to an ESL power level maintenance device according to the ESL status information received from the ESL base station and based on different ESL power level management strategies, so as to perform power level maintenance on different ESLs; and
charging, by the ESL power level maintenance device according to the ESL power level management strategies and the ESL status information carried in the power level maintenance instruction, the ESLs by using different charging modes corresponding to the ESL power level management strategies; and the charging modes comprise illuminating the ESLs with a light source, emitting radio energy, and near-field coupling charging.

In another embodiment, the power level management apparatus for ESLs may be configured separately from the central processor 1001. For example, the power level management apparatus for ESLs may be configured as a chip connected to the central processor 1001, and realize the ESL power level management function under the control of the central processor.

As illustrated in FIG. 16, the computer device 1000 may further include a communication module 1003, an input unit 1004, an audio processor 1005, a display 1006 and a power supply 1007. It should be noted that the computer device 1000 does not necessarily include all the components illustrated in FIG. 16. In addition, the computer device 1000 may further include components not illustrated in FIG. 16, which may be referred to the prior art.

As illustrated in FIG. 16, the central processor 1001 is also sometimes referred to as a controller or an operational control unit, which may include a microprocessor or any other processor device and/or logic device. The central processor 1001 receives inputs and controls the operations of respective components of the computer device 1000.

In this embodiment, the memory 1002 may be, for example, one or more of a cache, a flash memory, a hard drive, a removable medium, a volatile memory, a non-volatile memory, or any other suitable device. The memory 1002 may store failure-related information, and a program for executing relevant information. The central processor 1001 may execute the program stored in the memory 1002 to realize information storage, processing, etc.

The input unit 1004 provides an input to the central processor 1001. The input unit 1004 may be, for example, a key or a touch input device. The power supply 1007 is configured to supply electric power to the computer device 1000. The display 1006 is configured to display a tobe-displayed object such as an image, a text, or the like. The display may be, for example, an LCD display, but is not limited thereto.

The memory 1002 may be a solid-state memory, such as a read-only memory (ROM), a random-access memory (RAM), a subscriber identity module (SIM) card, or the like. It may also be a memory which retains information even when power is cut off, is selectively erasable, and allows for additional data storage. Such memory is sometimes referred to as an erasable programmable read-only memory (EPROM) or similar. The memory 1002 may further be some other type of device. The memory 1002 includes a buffer memory 1021 (sometimes referred to as a buffer). The memory 1002 may include an application/function storage section 1022 configured to store an application program and a functional program, or to store a process for the central processor 1001 to perform the operations of the computer device 1000.

The memory 1002 may further include a data storage section 1023 configured to store data such as contacts, number data, pictures, sounds, and/or any other data used by the electronic device. A driver storage section 1024 of the memory 1002 may include various drivers for the communication function of the electronic device and/or to perform other functions thereof (e.g., messaging applications, address book applications, etc.).

The communication module 1003 is a sender/receiver 1003 that sends and receives signals via an antenna 1008. The communication module (sender/receiver) 1003 is coupled to the central processor 1001 to provide an input signal and receive an output signal, which is the same as the case of conventional mobile communication terminals.

Based on different communication technologies, a single electronic device may be provided with a plurality of communication modules 1003, such as a cellular network module, a Bluetooth module, and/or a wireless local area network (WLAN) module, etc. The communication module (sender/receiver) 1003 is further coupled to a speaker 1009 and a microphone 1010 via an audio processor 1005, so as to provide an audio output via the speaker 1009 and receive an audio input from the microphone 1010, thereby realizing the common telecommunication functions. The audio processor 1005 may include any suitable buffer, decoder, amplifier, etc. In addition, the audio processor 1005 is further coupled to the central processor 1001, thereby enabling local audio recording by the microphone 1010 and playback of locally stored audio by the speaker 1009.

The embodiments of the present disclosure further provide a computer-readable storage medium which stores a computer program, and when executed by a processor, the computer program performs the aforementioned ESL power level management method.

The embodiments of the present disclosure further provide a computer-readable program product, which includes a computer program, and when executed by a processor, the computer program implements the aforementioned ESL power level management method.

In the embodiments of the present disclosure, a plurality of ESLs are provided, each configured to display ESL content, charge the respective ESL by harvesting and converting light energy and energy from other sources, and collect and report ESL status information thereof; the ESL status information includes remaining power level information, ambient light intensity information and positioning information; the energy from other sources is one or any combination of vibration micro-energy, radio micro-energy, temperature difference micro-energy and battery energy; an ESL base station is configured to forward the ESL status information received from the plurality of ESLs based on preset communication protocols; an ESL management device is configured to send a power level maintenance instruction to an ESL power level maintenance device according to the ESL status information received from the ESL base station and based on different ESL power level management strategies, so as to perform power level maintenance on different ESLs; the ESL power level maintenance device is configured to charge, according to the ESL power level management strategies and the ESL status information carried in the power level maintenance instruction, the ESLs by using different charging modes corresponding to the ESL power level management strategies; and the charging modes include illuminating the ESLs with a light source, emitting radio energy, and near-field coupling charging. Compared with the conventional solutions in the prior art where the ESL power level can only be maintained and managed manually, the technical solution proposed in the embodiments of the present disclosure adopts the ESLs mainly powered by light energy and compatible with other micro-energy sources. In combination with the ESL management device, this technical solution conducts power level management and maintenance on the ESLs by means of various ESL power level maintenance devices in multiple modes, thereby avoiding errors and omissions easily caused by manual ESL power level maintenance and management in the prior art, and improving the accuracy and efficiency of ESL power level management. Meanwhile, based on preset ESL power level management strategies, it is possible to perform intelligent light supplement, inspection and charging maintenance on the ESLs in different charging modes corresponding to the ESL power level management strategies, thereby realizing intelligent monitoring, management and maintenance on the energy for the ESLs throughout the full life cycle, prolonging the service life and reducing the maintenance cost thereof.

Those skilled in the art should appreciate that any embodiment of the present disclosure can be provided as a method, a system or a computer program product. Therefore, the present disclosure can take the form of a full hardware embodiment, a full software embodiment, or an embodiment combining software and hardware. Moreover, the present disclosure can take the form of a computer program product implemented on one or more computer usable storage mediums (including, but not limited to, a magnetic disc memory, CD-ROM, optical storage, etc.) containing therein computer usable program codes.

The present disclosure is described with reference to a flowchart and/or a block diagram of the method, device (system) and computer program product according to the embodiments of the present disclosure. It should be appreciated that each flow and/or block in the flowchart and/or the block diagram and a combination of flows and/or blocks in the flowchart and/or the block diagram can be realized by computer program instructions. Those computer program instructions can be provided to a general computer, a dedicated computer, an embedded processor or a processor of other programmable data processing device to produce a machine, such that the instructions executed by the processor of the computer or other programmable data processing device produce means for realizing specified functions in one or more flows in the flowchart and/or one or more blocks in the block diagram.

These computer program instructions may also be stored in a computer readable memory capable of guiding the computer or other programmable data processing devices to work in a particular manner, such that the instructions stored in the computer readable memory can produce manufacture articles including an instructing device which realizes function(s) specified in one or more flows in the flowchart and/or one or more blocks in the block diagram.

These computer program instructions may also be loaded onto the computer or other programmable data processing devices, such that a series of operation steps are performed on the computer or other programmable data processing devices to produce a processing realized by the computer, thus the instructions executed on the computer or other programmable devices provide step(s) for realizing function(s) specified in one or more flows in the flowchart and/or one or more blocks in the block diagram.

The specific embodiments further make detailed illustrations to the objectives, technical solutions and advantageous effects of the present disclosure. It should be understood that those described above are only specific embodiments of the present disclosure and are not intended to limit the protection scope of the present disclosure. Any modification, equivalent substitution or improvement made within the spirit and principle of the present disclosure should fall within the protection scope of the present disclosure.

## Claims

1. A power level management system for electronic shelf labels (ESLs), comprising:
a plurality of ESLs, each configured to display ESL content, charge the respective ESL by harvesting and converting light energy and energy from other sources, and collect and report ESL status information thereof; wherein the ESL status information comprises remaining power level information, ambient light intensity information and positioning information; the energy from other sources comprises one or any combination of vibration micro-energy, radio micro-energy, temperature difference micro-energy and battery energy;
an ESL base station, configured to forward the ESL status information received from the plurality of ESLs based on a preset communication protocol;
an ESL management device, configured to send a power level maintenance instruction to an ESL power level maintenance device according to the ESL status information received from the ESL base station and based on different ESL power level management strategies, so as to perform power level maintenance on different ESLs; and
the ESL power level maintenance device, configured to charge, according to the ESL power level management strategies and the ESL status information carried in the power level maintenance instruction, the ESLs by using different charging modes corresponding to the ESL power level management strategies; wherein the charging modes comprise illuminating the ESLs with a light source, emitting radio energy, and near-field coupling charging.

2. The system according to claim 1, wherein the ESL comprises a control module, a positioning module, an ambient light intensity monitoring module, an energy storage device, a micro-energy charging circuit, a communication module and a solar cell sheet;
the positioning module is configured to determine the positioning information of the ESL;
the ambient light intensity monitoring module is configured to monitor ambient light intensity around the ESL;
the solar cell sheet is configured to charge the energy storage device by harvesting and converting light energy, wherein the light energy comprises ambient light and sunlight;
the micro-energy charging circuit is configured to charge the energy storage device by harvesting and converting the vibration micro-energy, the radio micro-energy and the temperature difference micro-energy;
the control module is configured to determine the remaining power level information of the ESL according to collected power-level related parameters inside the ESL;
the communication module is configured to report the remaining power level information, the ambient light intensity information and the positioning information of the ESL.

3. The system according to claim 2, wherein the control module is specifically configured to:
determine, if the ESL is in an operating status, the remaining power level information of the ESL based on a load voltage parameter of an energy storage module of the ESL and a preset relationship between load voltage parameters and remaining power level information;
determine, if the ESL is in a non-operating status, the remaining power level information of the ESL based on an open-circuit voltage parameter of the energy storage module of the ESL and a preset relationship between open-circuit voltage parameters and remaining power level information; and/or
determine the remaining power level information of the ESL based on a voltage difference between the open-circuit voltage parameter and the load voltage parameter of the energy storage module of the ESL and a preset relationship between voltage differences and remaining power level information; and/or
integrate current consumption generated by executing instruction operations by the ESL to obtain power consumption generated by ESL performing the instruction operations, and determine the remaining power level information of the ESL based on the power consumption.

4. The system according to claim 1, wherein the ESL management device is specifically configured to:
determine the power level status, the ambient light intensity information and the positioning information of each ESL according to the ESL status information received from the ESL base station;
determine the charging priority of each ESL according to the power level status thereof;
determine a charging topology map for the ESLs according to the charging priority, the ambient light intensity information and the positioning information of each ESL using artificial intelligence (AI) technology; wherein the charging topology map is used to show the charging sequence and the ESL power level management strategies of different ESLs; and
send the power level maintenance instruction to the ESL power level maintenance device according to the charging topology map for the ESLs, so as to perform power level maintenance on different ESLs.

5. The system according to claim 1, wherein the ESL power level maintenance device comprises an AI inspection robot;
the AI inspection robot comprises:
a first ESL positioning module, configured to determine first ESLs to be charged according to the positioning information contained in the ESL status information carried in the power level maintenance instruction; and
a first charging module, configured to, when the AI inspection robot moves to the positions of the ESLs to be charged, invoke charging modes corresponding to the ESL power level management strategies carried in the power level maintenance instruction, so as to charge the first ESLs to be charged.

6. The system according to claim 1, wherein the ESL power level maintenance device comprises an AI shopping cart;
the AI shopping cart comprises:
a second ESL positioning module, configured to determine second ESLs to be charged within a preset range of the AI shopping cart according to the positioning information contained in the ESL status information carried in the power level maintenance instruction; and
a second charging module, configured to invoke charging modes corresponding to the ESL power level management strategies carried in the power level maintenance instruction during movement of the AI shopping cart, so as to charge all the second ESLs to be charged within the preset range of the AI shopping cart.

7. The system according to claim 1, wherein the ESL power level maintenance device comprises an AI light source;
the AI light source comprises:
a third ESL positioning module, configured to determine third ESLs to be charged within a radiation range of the AI light source according to the positioning information contained in the ESL status information carried in the power level maintenance instruction; and
a third charging module, configured to invoke charging modes corresponding to ESL power level management strategies carried in the power level maintenance instruction, so as to charge the third ESLs to be charged within the radiation range of the AI light source.

8. The system according to claim 1, wherein the ESL power level maintenance device comprises AI shelves;
each AI shelf comprises:
a fourth ESL positioning module, configured to determine fourth ESLs to be charged on different AI shelves according to the positioning information contained in the ESL status information carried in the power level maintenance instruction; and
a fourth charging module, configured to invoke charging modes corresponding to the ESL power level management strategies carried in the power level maintenance instruction, so as to charge the fourth ESLs to be charged on different AI shelves.

9. A power level management method for electronic shelf labels (ESLs), which is applied to the power level management system for the ESLs according to any one of claims 1 to 8, the method comprising:
displaying, by the ESL, ESL content, charge itself by harvesting and converting light energy and energy from other sources, and collect and report ESL status information thereof; wherein the ESL status information comprises remaining power level information, ambient light intensity information and positioning information; the energy from other sources comprises one or any combination of vibration micro-energy, radio micro-energy, temperature difference micro-energy and battery energy;
forwarding, by the ESL base station, the ESL status information received from the plurality of ESLs based on a preset communication protocol;
sending, by the ESL management device, a power level maintenance instruction to an ESL power level maintenance device according to the ESL status information received from the ESL base station and based on different ESL power level management strategies, so as to perform power level maintenance on different ESLs; and
charging, by the ESL power level maintenance device according to the ESL power level management strategies and the ESL status information carried in the power level maintenance instruction, the ESLs by using different charging modes corresponding to the ESL power level management strategies; wherein the charging modes comprise illuminating the ESLs with a light source, emitting radio energy, and near-field coupling charging.

10. A computer device, comprising a memory, a processor, and a computer program stored in the memory and executable on the processor, wherein when executing the computer program, the processor implements the method according to claim 9.

11. A computer-readable storage medium, wherein the computer-readable storage medium stores a computer program which when executed by a processor, implements the method according to claim 9.

12. A computer program product, wherein the computer program product comprises a computer program which when executed by a processor, implements the method according to claim 9.
